# EUROPÄISCHE PATENTSCHRIFT

(11) **EP 1 910 147 B1**
(45) Veröffentlichungstag und Bekanntmachung des Hinweises auf die Patenterteilung: **23.09.2009**
(21) Anmeldenummer: 06760802.6
(22) Anmeldetag: 26.07.2006
(51) Int. Cl.: B62D 1/184

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION AJUSTABLE CONÇUE POUR UN VEHICULE AUTOMOBILE

(30) Priorität: 01.08.2005 DE 102005036582
(43) Veröffentlichungstag der Anmeldung: 16.04.2008
(73) Patentinhaber: ThyssenKrupp Presta Aktiengesellschaft, 9492 Eschen (LI)
(72) Erfinder: LUTZ, Christian, A-6714 Nüziders (AT)
(74) Vertreter: Hofmann, Ralf U.
(86) Internationale Anmeldenummer: PCT/AT2006/000315
(87) Internationale Veröffentlichungsnummer: WO 2007/014408

(56) Entgegenhaltungen:
- EP-A- 0 796 780
- EP-B- 0 755 842
- EP-B- 0 802 104
- EP-B- 0 836 981
- DE-A1- 19 805 289
- DE-A1- 19 839 496
- DE-C1- 10 031 721
- FR-A- 2 810 956
- US-A- 6 092 957

## Beschreibung

Die Erfindung betrifft eine verstellbare Lenksäule für ein Kraftfahrzeug, die eine Fixiereinrichtung aufweist, in deren geöffnetem Zustand die Lenksäule in mindestens eine Verstellrichtung verstellbar ist und in deren geschlossenem Zustand die eingestellte Position der Lenksäule fixiert ist und die für die Verstellrichtung bzw. für mindestens eine der Verstellrichtungen zur Fixierung der eingestellten Position mindestens ein Feststellteil, welches zumindest eine Verzahnung mit Zähnen besitzt, und mindestens ein Gegenfeststellteil aufweist, welches zumindest eine Gegenverzahnung mit Zähnen besitzt, wobei im geschlossenen Zustand der Fixiereinrichtung Zähne des Feststellteils mit Zähnen des Gegenfeststellteils im Eingriff sind und beim Öffnen der Fixiereinrichtung sich das Gegenfeststellteil vom Feststellteil in eine Öffnungsrichtung abhebt und im geöffneten Zustand der Fixiereinrichtung die Zähne des Gegenfeststellteils außer Eingriff mit den Zähnen des Feststellteils sind und wobei in einem Querschnitt, dessen Ebene parallel zur Verstellrichtung und parallel zur Öffnungsrichtung liegt, durch die Zähne des Feststellteils und des Gegenfeststellteils gesehen, beide Seitenflanken der Zähne des Feststellteils und des Gegenfeststellteils im geschlossenen Zustand der Fixiereinrichtung zumindest in einem Abschnitt ihrer Erstreckung Neigungswinkel von weniger als 20°, vorzugsweise weniger als 12°, mit der Öffnungsrichtung einschließen

Verstellbare Lenksäulen sind in unterschiedlichen Ausführungsformen bekannt. Zur Anpassung an die Sitzposition des Fahrers können solche verstellbaren Lenksäulen in der Länge (= in achsialer Richtung) und/oder in ihrer Winkelposition (= in der Neigung) verstellt werden, wobei es bei PKW durch eine Verstellung der Winkelposition zu einer Höhenverstellung kommt.

Zur Festlegung der eingestellten Position der Lenksäule dienen Fixiereinrichtungen, die formschlüssig und/oder reibschlüssig wirken. Diese Fixiereinrichtungen müssen einerseits die im . Normalbetrieb auftretenden Kräfte aufnehmen können, um die eingestellte Position der Lenksäule zu erhalten, andererseits muss im Crash-Fall ein unkontrolliertes Verstellen der Lenksäule verhindert werden, damit beispielsweise die korrekte Position eines im Lenkrad angeordneten Airbags erhalten bleibt und/oder die Energie beim Aufprall des Fahrers auf das Steuerrad kontrolliert abgebaut werden kann.

Reibschlüssig wirkende Fixiereinrichtungen mit nach Art einer Lamellenkupplung zusammenwirkenden Lamellen sind beispielsweise aus der EP 0 802 104 B1 oder US 6,581,965 B2 bekannt.

Weiters sind verstellbare Lenksäulen bekannt, bei denen die Fixiereinrichtung gezahnte Teile aufweist, die im geschlossenen Zustand der Feststelleinrichtung ineinander eingreifen und ' somit die Längenverstellung und/oder Winkelverstellung der Lenksäule blockieren. Eine solche Lenksäule ist beispielsweise aus der EP 0 836 981 B1, EP 0 755 842 B1, DE 198 39 496 A1, US 5,787,759 A und DE.101 30 587 A1 bekannt.

Vorgeschlagen wurden auch bereits verstellbare Lenksäulen, bei denen in verschiedene Verstellrichtungen unterschiedliche Wirkprinzipien zum Einsatz kommen, beispielsweise eine reibschlüssige Feststellung der Längenverstellung und eine formschlüssige Feststellung der Winkelverstellung.

Zur Gewichtseinsparung sollen verstellbare Lenksäulen möglichst leicht ausgebildet werden, was zu einer gewissen Elastizität auch der Fixiereinrichtung führt. Allerdings muss die Fixiereinrichtung ausreichend stabil ausgebildet.sein, um die eingestellte Position der Lenksäule auch bei hohen einwirkenden Kräften, wie diese im Crash-Fall auftreten, zu fixieren. Bei einer in eine Verstellrichtung reibschlüssig wirkenden Fixierung müssen hierbei ausreichend hohe Anpresskräfte zum gegenseitigen Andrücken der Reibflächen aneinander aufgebracht werden. Bei Verzahnungen wirken durch die schrägstehenden Zahnflanken ebenfalls Kräfte in Richtung einer Distanzierung der die Verzahnungen aufweisenden Teile, die von der Fixiereinrichtung ' aufgenommen werden müssen, sodass die gesamte Konstruktion relativ massiv ausgebildet werden muss.

Bei formschlüssig durch einen Zahneingriff von Verzahnungen wirkenden Fixiereinrichtungen besteht das Problem, dass beim Schließen der Fixiereinrichtung die Zahnkämme der einander gegenüberliegenden Verzahnungen aufeinander auftreffen können ("Zahn-auf-Zahn"-Stellung), wobei die Fixiereinrichtung nicht ordnungsgemäß geschlossen werden kann. Um dieses Problem zu verringern, sind die Zahnkämme üblicherweise möglichst spitz ausgebildet, d. h. die winkelig aufeinanderzu laufenden Seitenflanken der Zähne sind im Querschnitt gesehen im Bereich des Zahnkammes durch einen möglichst kleinen Radius miteinander verbunden. Weiters wurden bereits verschiedene Einrichtungen vorgeschlagen, mittels denen das Aufeinandertreffen der Zahnspitzen beim Schließen der Fixiereinrichtung verhindert werden soll. Bei der Einrichtung der DE 198 39 496 A1 ist zu diesem Zweck eines der die Verzahnungen aufweisenden Feststellteile um eine Achse verschwenkbar gelagert, die rechtwinklig zur Verstellrichtung und rechtwinklig zur Öffnungsrichtung der beiden Feststellteile liegt Im geöffneten Zustand steht das verschwenkbar gelagerte Feststellteil durch eine Verschwenkung um diese Querachse schräg zum anderen Feststellteil. Eine derartige Ausbildung ist auch aus der US 5,787,759 A bekannt. Hierbei sind die Zähne der Verzahnungen sägezahnartig ausgebildet, d. h. eine der Seitenflanken eines jeweiligen Zahns steht winklig zur Öffnungsrichtung, die andere Seitenflanke steht parallel zur Öffnungsrichtung (für das verschwenkbar gelagerte Feststellteil gilt dies für den geschlossenen Zustand der Fixiereinrichtung).

Eine weitere derartige Fixiereinrichtung mit einem um eine Querachse verschwenkbaren Feststellteil ist aus der DE 101 30 587 A1 bekannt, wobei die Zähne der Verzahnungen der miteinander in Eingriff bringbaren Feststellteile wiederum sägezahnartig ausgebildet sind.

Eine verstellbare Lenksäule nach dem Oberbegriff des Anspruchs 1 ist aus der US 6,092,957 A bekannt.

Aufgabe der Erfindung ist, eine verstellbare Lenksäule der eingangs genannten Art bereitzustellen, bei der im geschlossenen Zustand der Fixiereinrichtung trotz einer leichten Bauweise der Lenksäule hohe Kräfte aufgenommen werden können, ohne dass es für die betreffende Verstellrichtung(en) zu einer Verstellung der eingestellten Position kommt, wobei eine Spielfreiheit in die Verstellrichtung erzielt wird.

Erfindungsgemäß gelingt dies durch eine verstellbare Lenksäule mit den Merkmalen des Patentanspruchs 1.

Durch diese Ausbildung beider Seitenflanken der Zähne des Feststellteils und des Gegenfeststellteils kommt es bei einer in Richtung der betreffenden Verstellrichtung wirkenden Kraft wie sie insbesondere im Crash-Fall auftreten kann, zu keiner oder nur zu einer geringen Kraftkomponente, die im Sinne eines Auseinanderdrückens des Feststellteils und Gegenfeststellteils wirkt (parallel zur Öffnungsrichtung). Dadurch wird die Sicherheit gegenüber einem Durchrutschen der Verzahnungen im Crash-Fall erhöht und/oder die Fixiereinrichtung muss weniger massiv ausgebildet werden.

Durch die erfindungsgemäße Ausbildung der Zähne und der Böden der Zahnzwischenräume zwischen den Zähnen wird eine Spielfreiheit in die Verstellrichtung erzielt.

Vorzugsweise ist hierbei der Zahneingriff zwischen dem Feststellteil und dem Gegenfeststellteil gegenüber einer Kraft, die in die Verstellrichtung wirkt, in welcher Feststellteil und das Gegenfeststellteil die Verstellung fixieren, selbsthemmend ausgebildet. D. h. die Haftreibung zwischen den zusammenwirkenden Zähnen ist bei einer in die betreffende Verstellrichtung wirkenden Kraft, wie sie im Crash-Fall auftreten kann, mindestens so groß wie die durch diese Kraft hervorgerufene Kraftkomponente, die parallel zur Öffnungsrichtung im Sinne einer Distanzierung des Gegenfeststellteils vom Feststellteil wirkt. Diese im Sinne einer Distanzierung wirkenden Kraftkomponente kann also vollständig von der Reibkraft aufgenommen werden.

Obwohl eine solche selbsthemmende Ausbildung bevorzugt ist, erstreckt sich die Erfindung auch auf den Fall, dass keine vollständige Selbsthemmung der zusammenwirkenden Verzahnungen vorliegt, sondern nur eine relativ geringe die Haftreibung übersteigende Kraft vorliegt, die im Sinne einer Distanzierung des Gegenfeststellteils vom Feststellteil wirkt. Auch in diesem Fall kann noch eine relativ leichte Ausbildung der Lenksäule erreicht werden.

Die Neigungswinkel der Seitenflanken der Zähne, ab denen eine Selbsthemmung gegenüber einer in die Verstellrichtung wirkenden Kraft auftritt, hängt von den Materialien der Zähne und ihren Oberflächenbeschaffenheiten bzw. des Vorhandenseins von Schmiersubstanzen ab, wie dies in der Figurenbeschreibung noch ausgeführt wird.

Bekannt sind selbsthemmende Ausbildungen von Schraubengewinden, um einem ungewollten Öffnen der Schraube entgegenzuwirken. Auch beispielsweise bei Klauenkupplungen sind Ausbildungen mit Zähnen, die gegenüber einem Öffnen der Klauenkupplung selbsthemmend ausgebildet sind, beispielsweise in Form von Trapezzähnen, bekannt.

In einer vorteilhaften Ausführungsform der Erfindung weist das mindestens eine Feststellteil mindestens eine erste und mindestens eine zweite Verzahnung auf, die mit mindestens einer ersten und mindestens einer zweiten Gegenverzahnung des mindestens einen Gegenfeststellteils zusammenwirken.

Wenn hierbei die ersten und zweiten Verzahnungen und ersten und zweiten Gegenverzahnungen V-förmig zueinander stehen, so kann dadurch einem seitlichen Spiel (rechtwinklig zur Verstellrichtung) entgegengewirkt werden.

Wenn bei solchen ersten und zweiten Verzahnungen und ersten und zweiten Gegenverzahnungen das Gegenfeststellteil oder das Feststellteil um eine Wippachse verschwenkbar ist, die parallel zur Verstellrichtung liegt, und zwischen den Zähnen der ersten und zweiten Verzahnung bzw. den Zähnen der ersten und zweiten Gegenverzahnung ein Versatz vorliegt, so können hierdurch die Bereiche der Einstellpositionen der Lenksäule, in denen die Fixiereinrichtung ' aufgrund einer "Zahn-auf-Zahn "-Stellung der Verzahnungen nicht ordnungsgemäß geschlossen werden kann, verringert werden.

Vorzugsweise betragen die Neigungswinkel der Seitenflanken der Zähne des Feststellteils und des Gegenfeststellteils weniger als 12°.

Weitere Vorteile und Einzelheiten der Erfindung werden im Folgenden anhand der beiliegenden Zeichnung erläutert. In dieser zeigen:
- Fig. 1: eine Lenksäule gemäß einem ersten Ausführungsbeispiel in Seitenansicht, im geschlossenen Zustand der Fixiereinrichtung;
- Fig. 2: die Lenksäule von Fig. 1 in Draufsicht;
- Fig. 3: eine Seitenansicht von der gegenüberliegenden Seite;
- Fig. 4: einen Querschnitt durch die Lenksäule von Fig. 1, Schnittlinie A-A;
- Fig. 5: eine Schrägsicht, wobei Teile der Fixiereinrichtung explosionsartig auseinander gezogen sind;
- Fig. 6: das Feststellteil und das Gegenfeststellteil der Fixiereinrichtung im geschlossenen Zustand der Fixiereinrichtung, in Ansicht (Blickrichtung B in Fig. 2);
- Fig. 7: einen Schnitt entlang der Linie C-C von Fig. 6;
- Fig. 8: einen Schnitt entlang der Linie D-D von Fig. 7;
- Fig. 9: einen Schnitt entlang der Linie E-E von Fig. 7;
- Fig. 10: eine Unteransicht des Gegenfeststellteils (von der entgegengesetzten Seite wie in Fig. 6);
- Fig. 11: und Fig. 12 Schrägsichten des Gegenfeststellteils aus verschiedenen Blickrichtungen;
- Fig. 13: und Fig. 14 Schrägsichten des Feststellteils aus verschiedenen Blickrichtungen;
- Fig. 15: und Fig. 16 Schnittdarstellungen entsprechend Fig. 8 und Fig. 9 einer erfindungsgemäßen Ausbildung der Verzahnungen;
- Fig. 17: und Fig. 18 Schnittdarstellungen entsprechend den Fig. 8 und 9 einer weiteren erfindungsgemäßen Ausbildung der Verzahnungen;
- Fig. 19: einen Teil einer Fixiereinrichtung gemäß einer zweiten Ausführungsform einer Lenksäule, in einer Fig. 6 entsprechenden Ansicht;
- Fig. 20: Fig. 21 Schrägsichten aus verschiedenen Blickrichtungen des Teils der Fixiereinrichtung von Fig. 19;
- Fig. 22: einen Schnitt entlang der Linie F-F von Fig. 19;
- Fig. 23: einen Schnitt entlang der Linie G-G von Fig. 19;
- Fig. 24: einen Schnitt entlang der Linie H-H von Fig. 23;
- Fig. 25: und Fig. 26 Schnitte entlang der Linien I-I und J-J von Fig. 22;
- Fig. 27: und Fig. 28 sowie Fig. 29 und Fig. 30 Schrägsichten aus verschiedenen Blickrichtungen der beiden Stößelteile;
- Fig. 31: und Fig. 32 Schrägsichten aus verschiedenen Blickrichtungen des Führungsteils;
- Fig. 33: und Fig. 34 Schrägsichten aus verschiedenen Blickrichtungen des Betätigungsteils;
- Fig. 35: eine Seitenansicht einer Lenksäule gemäß einer dritten Ausführungsform;
- Fig. 36: eine Draufsicht auf die Lenksäule von Fig. 35;
- Fig. 37: eine Schrägsicht der Lenksäule, wobei Teile der Feststelleinrichtung explosionsartig auseinandergezogen sind (in der Schrägsicht ist die der in Fig. 35 gezeigten Seite gegenüberliegende Seite sichtbar);
- Fig. 38: eine Schrägsicht eines Teils der Lenksäule und Fig. 35, im geöffneten Zustand der Fixiereinrichtung;
- Fig. 39: und Fig. 40 Schnitte entlang der Linie K-K von Fig. 35 im geöffneten und im geschlossenen Zustand der Fixiereinrichtung;
- Fig. 41: eine Ansicht der Lenksäule im Bereich der Fixiereinrichtung (Blickrichtung L von Fig. 36), im geöffneten Zustand der Fixiereinrichtung; '
- Fig. 42: eine Seitenansicht, Blickrichtung M in Fig. 41;
- Fig. 43: einen Schnitt entlang der Linie N-N von Fig. 41;
- Fig. 44: einen Schnitt entlang der Linie O-O von Fig. 42;
- Fig. 45: einen Schnitt entlang der Linie P-P von Fig. 42;
- Fig. 46: eine Ansicht entsprechend Fig. 41, im vollständig geschlossenen Zustand der Fixiereinrichtung;
- Fig. 47: einen Schnitt entlang der Linie Q-Q von Fig. 46;
- Fig. 48 und Fig. 49: Schnitte entlang der Linien R-R und S-S von Fig. 47;
- Fig. 50: eine Ansicht entsprechend Fig. 42 im teilweise geschlossenen Zustand (ohne die Federn zur Distanzierung des Gegenfeststellteils vom Feststellteil);
- Fig. 51: und Fig. 52 Schnitte entlang der Linien U-U und T-T von Fig. 50;
- Fig. 53: und Fig. 54 Schrägsichten des Feststellteils aus verschiedenen Blickrichtungen;
- Fig. 55: und Fig. 56 Schrägsichten des Gegenfeststellteils aus verschiedenen Blickrichtungen;
- Fig. 57: eine Ansicht einer modifizierte Ausführungsform des Gegenfeststellteils.

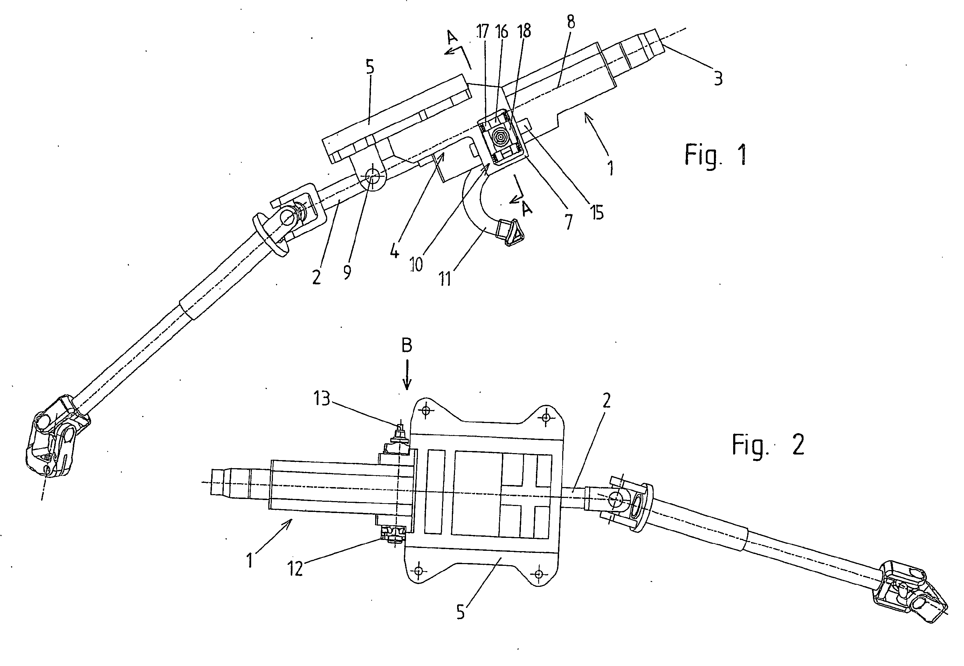

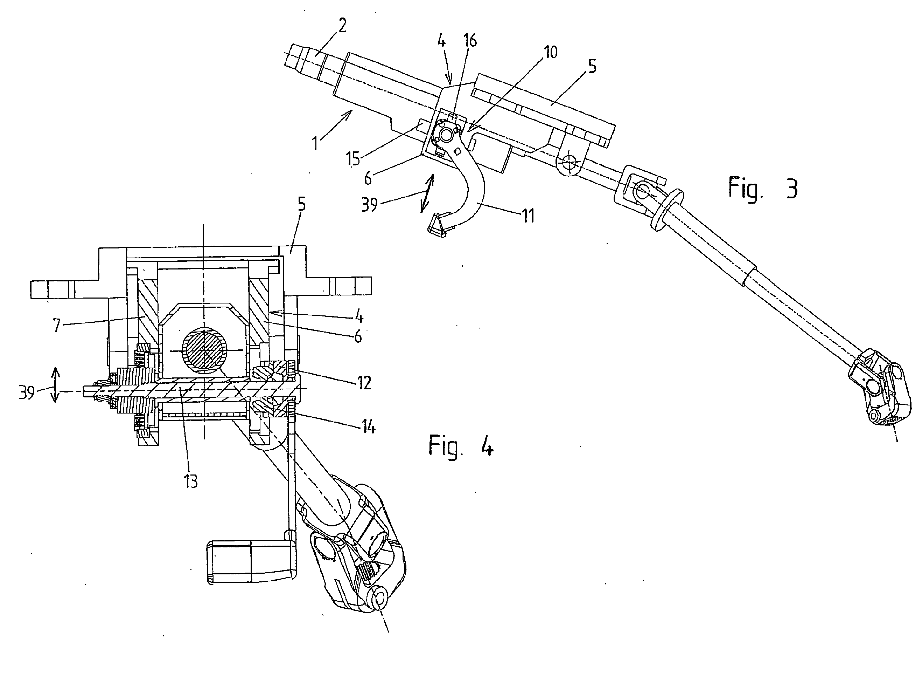

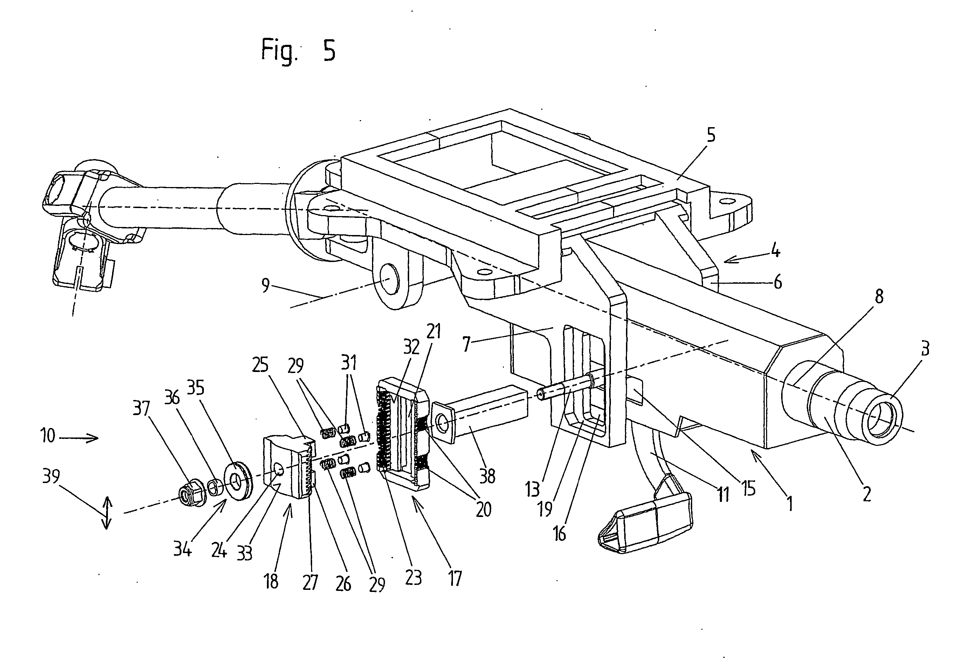

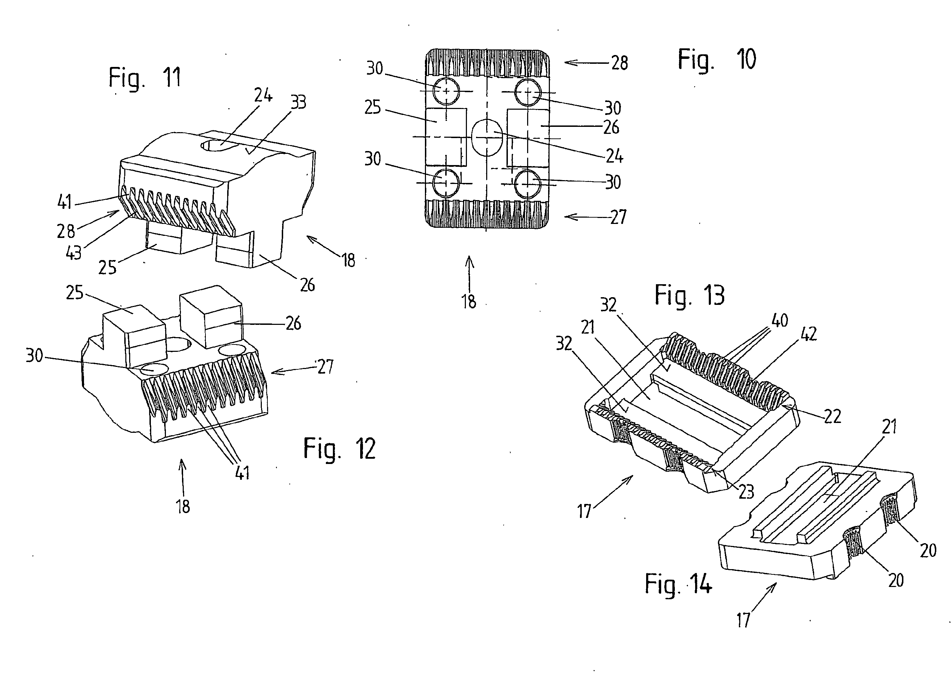

Ein erstes Ausführungsbeispiel einer Lenksäule ist in den Fig. 1 bis 14 dargestellt. Die Lenksäule weist eine in einer Manteleinheit 1 drehbar gelagerte Lenkspindel 2 auf, an deren Ende 3 ein nicht dargestelltes Lenkrad zu befestigen ist. Die Manteleinheit 1 wird von einer Trageinheit 4 getragen, die mit dem Chassis des Kraftfahrzeugs verbunden ist. Hierzu ist sie mit einem am Chassis montierten Halteteil 5 verbunden. Die Verbindung zwischen der Trageinheit 4 und dem Halteteil 5 ist im Normalbetrieb unbeweglich. Im Crash-Fall kann vorgesehen sein, dass sich die Trageinheit 4 gegenüber dem Halteteil 5 unter Aufzehrung von Energie verschiebt. Lösungen hierfür sind bekannt und nicht Gegenstand dieser Erfindung.

Die Trageinheit 4 weist beidseitig neben der Manteleinheit 1 (die auch als Mantelrohr oder Führungskasten bezeichnet werden kann) sich erstreckende Seitenwagen 6, 7 auf, die an, vorzugsweise eben ausgebildeten, Seitenflächen der Manteleinheit 1 anliegen (zumindest im geschlossenen Zustand der Fixiereinrichtung). Die Trageinheit 4 ist im Querschnitt gesehen U-förmig ausgebildet, wobei die beiden Seitenwangen 6, 7 die parallelen U-Schenkei bilden.

Im Ausführungsbeispiel gemäß den Fig. 1 bis 14 ist die Lenksäule sowohl in Längsrichtung, also in Richtung der Längsachse 8 der Lenkspindel, als auch in der Höhe verstellbar, also in ihrer Winkelstellung um die Schwenkachse 9. Zur Längsverstellung weist die Lenkspindel 2 in bekannter Weise teleskopierbare Abschnitte auf (nicht sichtbar in den Fig.).

Zur Fixierung der eingestellten Position der Lenksäule ist eine Fixiereinrichtung 10 vorhanden, die im gezeigten Ausführungsbeispiel von einem Betätigungshebel 11 betätigt wird. Durch eine Verschwenkung des Betätigungshebels 11 zwischen einer Offenstellung und einer Schließstellung wird eine mit dem Betätigungshebel 11 starr verbundene Nockenscheibe 12, die auf einem Fixierbolzen (=Spannbolzen) 13 angeordnet ist, um die Längsachse des Fixierbolzens 13 gedreht. Die drehbare Nockenscheibe 12 wirkt mit einer Kulissenscheibe 14 zusammen, die unverdrehbar gehalten ist (durch eine Verdrehsicherung gegenüber der Seitenwange 6, wobei sie gegenüber der Seitenwange 6 in die Verstellrichtung 39 der Höhenverstellung verschiebbar ist).

Der Fixierbolzen 13 durchsetzt sich kreuzende Langlöcher 15, 16 in der Manteleinheit 1 und in den Seitenwangen 6, 7 der Trageinheit 4. Beispielsweise können die Langlöcher 16 in den Seitenwangen 6, 7 in Richtung der Höhenverstellung der Lenksäule und das Langloch 15 in der Manteleinheit 1 in Richtung der Längenverstellung der Lenksäule ausgerichtet sein.

Die Fixiereinrichtung 10 umfasst weiters ein Feststellteil 17 und ein Gegenfeststellteil 18. Beim Öffnen und Schließen der Fixiereinrichtung werden diese voneinander weg bzw. aufeinander zu bewegt, und zwar in eine Öffnungsrichtung 49 oder entgegen der Öffnungsrichtung 49.

Das Feststellteil 17 ist an der Seitenwange 7 der Trageinheit 4 festgelegt. Hierzu ist es im gezeigten Ausführungsbeispiel in eine Vertiefung 19 der Seitenwange 7 eingepresst. Zur Erhöhung der Haltekraft in der Vertiefung 19 weist das Feststellteil 17 an seinem Außenumfang verzahnte Mulden 20 auf, die auf entsprechende Erhöhungen am Rand der Vertiefung 19 eingepresst werden, welche in den Fig. der Einfachheit halber nicht dargestellt sind. Auch andere Arten der Befestigung des Feststellteils 17 an der Seitenwange 7 der Trageinheit 4 sind denkbar und möglich, beispielsweise mittels einer Verschweißung (bei einer Stahl-Bauweise). Weiters ist es auch denkbar und möglich, dass das Feststellteil 17 einteilig mit der Seitenwange 7 ausgebildet ist, also von einem Abschnitt der Seitenwange 7 gebildet wird.

Das Feststellteil 17 weist weiters eine in Form eines Langlochs ausgebildete Öffnung 21 auf, die vom Fixierbolzen 13 durchsetzt wird und parallel zum Langloch 16 in der Seitenwange 7 ausgerichtet ist.

Das Feststellteil 17 besitzt erste und zweite Verzahnungen 22, 23 die weiter unten genauer erläutert werden.

Das Gegenfeststellteil 18 ist auf dem Fixierbolzen 13 angeordnet. Hierzu besitzt es eine vom Fixierbolzen 13 durchsetzte Öffnung 24.

Fortsätze 25, 26 des Gegenfeststellteils 18 ragen beidseitig des Fixierbolzens 13 in die Öffnung 21 des Feststellteils 17 und führen das Gegenfeststellteil 18 gegenüber dem Feststellteil 17.

Das Gegenfeststellteil 18 besitzt eine erste Gegenverzahnung 27 und eine zweite Gegenverzahnung 28, die weiter unten noch genauer beschrieben werden.

Das Feststellteil 17 und das Gegenfeststellteil 18 sind im gezeigten Ausführungsbeispiel einstückig ausgebildet, vorzugsweise ais Sinterteile hergestellt. Auch mehrteilige Ausbildungen sind denkbar und möglich, wobei auch unterschiedliche Werkstoffe zum Einsatz kommen können.

Zur Distanzierung des Gegenfeststellteils 18 vom Feststellteil 17 im geöffneten Zustand der Fixiereinrichtung 10 dienen Federn 29, die im gezeigten Ausführungsbeispiel in Form von Schraubenfedern ausgebildet sind und von Sacklöchern 30 des Gegenfeststellteils 18 mit Endabschnitten aufgenommen sind. In ihre anderen Endabschnitte sind Gleitschuhe 31 eingesetzt, die auf Gleitflächen 32 des Feststellteils 17 aufliegen. Die vier Federn 29 sind an den Eckpunkten eines gedachten Rechtecks angeordnet, das den Feststellbolzen 13 umgibt.

An einer Anlagefläche 33 des Gegenfeststellteils 18, die auf der vom Feststellteil 17 abgewandten Seite des Gegenfeststellteils 18 angeordnet ist, liegt ein Anlageteil 34 an, das im gezeigten Ausführungsbeispiel in Form eines Achsiallagers ausgebildet ist. Dieses umfasst zwei durch zwischengelagerte Wälzkörper gegeneinander verdrehbare Scheiben 35. In den zentralen Öffnungen dieser Scheiben 35 ist ein Ring 36 angeordnet, der auch entfallen könnte, auf der dem Gegenfeststellteil 18 gegenüberliegenden Seite stützt sich das Anlageteil 34 an einem mit dem Fixierbolzen 13 verbundenen Abstützteil 37 ab, das im gezeigten Ausführungsbeispiel von einer auf ein Außengewinde des Fixierbolzens 13 aufgeschraubten Mutter gebildet wird.

Die Anlagefläche 33 des Gegenfeststellteils ist zum Anlageteil 34 hin konvex gewölbt ausgebildet. Diese konvexe Ausbildung könnte auch dahingehend modifiziert sein, dass zwei schräg ansteigende, aber ebene Flächen vorhanden sind, die über einen mehr oder weniger großen Radius miteinander verbunden sind, an welchem das Anlageteil 34 anliegt.

Die auf dem Fixierbolzen 13 vorzugsweise angeordnete Führungshülse 38, die eine rechteckige Außenkontur aufweist, dient zur Kraftübertragung und Verringerung des Spiels des Fixierbolzens 13 gegenüber dem Langloch 15 in der Manteleinheit 1 und dem Langloch 16 in der Seitenwange 7.

Das Feststellteil 17 und das mit ihm zusammenwirkende Gegenfeststellteil 18 dienen zur Fixierung der Lenksäule im geschlossenen Zustand der Fixiereinrichtung gegen eine Verstellung der eingestellten Position der Lenksäule in der durch den Doppelpfeil 39 angedeuteten Verstellrichtung, die der Höhenverstellung der Lenksäule entspricht. Hierzu wirken Verzahnungen 22, 23 des Feststellteils und die Gegenverzahnungen 27, 28 des Gegenfeststellteils 18 zusammen.

Die Verzahnungen 22, 23 und 27, 28 weisen jeweils eine Reihe von Zähnen 40, 41 auf. Diese Zahnreihen verlaufen im wesentlichen parallel zur Verstellrichtung 39 (d.h. sie weisen eine Abweichung zur Parallelen von weniger als +/- 20° auf) und die Kämme 42, 43, die von den freien Enden der Zähne 40, 41 gebildet werden, verlaufen quer zur Verstellrichtung 39, vorzugsweise im Wesentlichen rechtwinklig hierzu (d.h. sie weisen eine Abweichung zur rechtwinkligen Anordnung von weniger als +/- 20°auf).

Zwischen den Zähnen 40 der ersten Verzahnung 22 und den Zähnen 40 der zweiten Verzahnung 23 des Feststellteils liegt bezogen auf die Verstellrichtung 39 ein Versatz v vor, der vorzugsweise die Hälfte des Mitten-Abstands a zwischen aufeinanderfolgenden Zähnen 40 beträgt. Die Mitten-Abstände a zwischen aufeinanderfolgenden Zähnen sind für alle Zähne 40, 41 der Verzahnungen 22, 23 und Gegenverzahnungen 27, 28 gleich.

Zwischen den Zähnen 41 der ersten und zweiten Gegenverzahnungen 27, 28 liegt dagegen kein solcher Versatz vor. ,

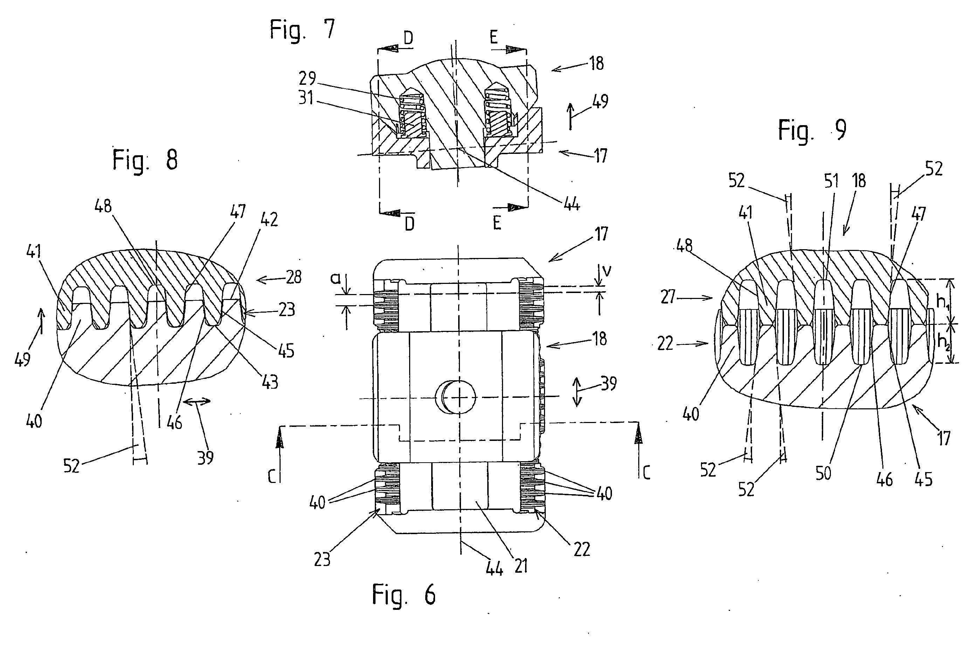

Demgemäß liegt beispielsweise für den Fall, dass bei einer eingestellten Position der Höhenverstellung für die Zähne 40, 41 der ersten Verzahnung 22 und ersten Gegenverzahnung 27 gerade eine "Kopf-auf-Kopf"-Stellung vorliegt (entsprechend Fig. 9), für die Zähne 40, 41 der zweiten Verzahnung 23 und zweiten Gegenverzahnung 28 gerade eine Stellung vor, in der die Kämme 42, 43 der einen Zähne 40, 41 den Zwischenräumen (Zahnlücken) zwischen den anderen Zähnen 41, 40 genau gegenüberliegen (entsprechend Fig. 8, wobei die Zahnreihen aber noch voneinander beabstandet sind).

Wird in dieser Versteflposition der Höhenverstellung die Fixiereinrichtung 10 geschlossen, so kommen nach einem ersten Teil des Schließvorgangs die Zähne 40, 41 der ersten Verzahnung 22 und der ersten Gegenverzahnung 27 mit ihren Kämmen 42, 43 gegenseitig zur Anlage Beim weiteren Schließen der Fixiereinrichtung wird das Gegenfeststellteil 18 um eine gedachte Wippachse 44, die parallel zur Längserstreckung der Verzahnungen 22, 23 und Gegenverzahnungen 27, 28 liegt (und zumindest im Wesentlichen parallel zur Verstellrichtung 39) verkippt-Hierbei kommen die Zähne 40, 41 der zweiten Verzahnung 23 und der zweiten Gegenverzahnung 28 in gegenseitigen Eingriff (Fig. 8), im vollständig geschlossenen Zustand der Fixiereinrichtung ist die in den Fig. 6 bis 9 dargestellte Situation erreicht. Die Zähne 40, 41 der ersten Verzahnung 22 und ersten Gegenverzahnung 27 liegen hierbei in einer "Kopf-auf-Kopf"= Stellung aneinander an, während die Zähne 40, 41 der zweiten Verzahnung 23 und zweiten Gegenverzahnung 28 vollständig miteinander im Eingriff sind. Hierbei stoßen die Kämme 43 der einen Zähne 41 an die Böden der Zahnzwischenräume zwischen den anderen Zähnen 40 an, im gezeigten Ausführungsbeispiel stoßen die Kämme 43 der Zähne 41 der zweiten Gegenverzahnung 28 an die Zahnzwischenräume zwischen den Zähnen 40 der zweiten Verzahnung 23 an. Zwischen den Seitenflanken 45, 46 der Zähne 40 und den Seitenflanken 47, 48 der Zähne 41 liegt hierbei ein geringes Spiel vor, um ein Verklemmen der Zähne 40, 41 zu verhindert.

Die gedachte Wippachse 44 stellt sich auch durch das Zusammenwirken der Fortsätze 25, 26 mit den Begrenzungen der Öffnung 21 ein, zu denen sie ein entsprechendes Spiel aufweisen. Die Führung der Fortsätze 25, 26 in der als Langloch ausgebildeten Öffnung 21 dient weiters auch als Verdrehsicherung für das Gegenfeststellteil 18 gegenüber dem Feststellteil 17.

Zur Ermöglichung der Verkippung des Gegenfeststellteils 18 durchsetzt der Fixierbolzen 13 die Öffnung 24 im Gegenfeststellteil 18 mit einem entsprechenden Spiel (in Bezug auf die rechtwinklig zur. Wippachse 44 liegende Richtung). Weiters ist die Anlagefläche 33 zum Anlageteil 34 hin, wie bereits erwähnt, konvex gewölbt, und zwar um die gedachte Wippachse 44 (oder hat wie ebenfalls bereits erwähnt schrägstehende Abschnitte).

Beim Schließen der Fixiereinrichtung 10 können die Zähne 40; 41 der Verzahnungen 22, 23 und Gegenverzahnungen 27, 28 in Abhängigkeit von der im Bezug auf die Verstellrichtung 39 eingestellten Position der Lenksäule unterschiedliche Stellungen zueinander einnehmen. Zuvor wurde eine Einstellung beschrieben, bei der die Kämme, 43 der Zähne 41 der zweiten Gegenverzahnung 28 den Zahnzwischenräumen zwischen den Zähnen 40 der zweiten Verzahnung 23 mittig gegenüberliegen (und umgekehrt die Kämme 42 der Zähne 40 der zweiten Verzahnung 23 den Zahnzwischenräumen der Zähne 41 der zweiten Gegenverzahnung 28). Wenn das Gegenfeststellteil 18 in die Verstellrichtung 39 demgegenüber um einen kleinen Bruchteil des Abstands a zwischen zwei Zähne 40, 41 verschoben ist, sodass beim Schließen der Fixiereinrichtung 10 noch ein Abschnitt einer der Seitenflanken 47, 48 der Zähne 41 der zweiten Gegenverzahnung 28 mit der korrespondierenden Seitenflanke 45, 46 der Zähne 40 der zweiten Verzahnung zur Anlage kommt oder zumindest Übergangsbereiche zwischen den Kämmen 42, 43 und den Seitenflanken 45, 46, 47, 48 zur gegenseitigen Anlage kommen, so wird beim Schließen der Fixiereinrichtung das Gegenfeststellteil 18 gegenüber dem Feststellteil 17 um diesen Bruchteil verschoben, sodass im geschlossenen Zustand wiederum die in den Fig. 6 bis 9 dargestellte Situation vorliegt. Wenn die Einstellposition zwischen dem Gegenfeststellteil 18 und dem Feststellteil 17 gegenüber der zuvor beschriebenen Situation um einen halben Zahnabstand a verschoben ist, so kommt es im geschlossenen Zustand zu einer "Kopf-auf-Kopf"-Stellung der Zähne 41, 40, der zweiten Gegenverzahnung 28 und der zweiten Verzahnung 23 und zu einem Eingriff der Zähne 41, 40 der ersten Gegenverzahnung 27 und ersten Verzahnung 22.

Weiters können dennoch Zwischenstellungen vorliegen, die zwar nur über relativ kleine Bereiche der gegenseitigen Positionierung des Gegenfeststellteils 18 und Feststellteils 17 auftreten, aber in denen ein ordnungsgemäßes Schließen der Fixiereinrichtung 10 aufgrund einer "Kopf-auf-Kopf -Stellung der Zähne 40, 41 beider Verzahnungen 22, 23 und Gegenverzahnungen 27, 28 nicht möglich ist. Die eingestellte Position am Lenkrad muss dann zum Schließen der Fixiereinrichtung 10 geringfügig geändert werden.

Anstelle des beschriebenen Versatzes der Zähne 40 der ersten und zweiten Verzahnungen 22, 23 oder zusätzlich hierzu könnten auch die Zähne 41 der ersten und zweiten Gegenverzahnungen 27, 28 einen solchen Versatz aufweisen.

Im Querschnitt durch die von den Verzahnungen 22, 23 und Gegenverzahnungen 27, 28 gebildeten Zahnreihen des Feststellteils 17 und Gegenfeststellteils 18 gesehen, wobei die Ebene dieses Querschnitts parallel zur Öffnungsrichtung 49 und rechtwinklig zur Verstellrichtung 39 liegt (vgl. Fig. 7), stehen die freien Enden bzw. Kämme 42 der Zähne 40 der ersten Verzahnung 22 und zweiten Verzahnung 23 V-förmig zueinander und ebenso stehen die Kämme 43 der Zähne 41 der ersten Gegenverzahnung 27 und der zweiten Gegenverzahnung 28 V-förmig zueinander, und zwar unter dem gleichen Winkel. Im geschlossenen Zustand der Fixiereinrichtung 10 wird dadurch eine Verschiebung des Gegenfeststellteils 18 gegenüber dem Feststellteil 17 in eine Richtung rechtwinklig zur Verstellrichtung 39 formschlüssig verhindert.

In einem Querschnitt durch die Zähne 40, 41 des Feststellteils 17 und Gegenfeststellteils 18 gesehen, wobei die Ebene dieses Querschnitts parallel zur Verstellrichtung 39 und parallel zur Öffnungsrichtung 49 liegt (vgl. Fig. 8 und 9), weisen beide Seitenflanken 45, 46 der Zähne 40 und beide Seitenflanken 47, 48 der Zähne 41, ausgenommen in den Übergangsbereichen zu den Kämmen 42, 43 bzw. zu den Böden 50, 51 der Zahnzwischenräumen, Neigungswinkel von weniger als 20°, vorzugsweise weniger als 12° zur Öffnungsrichtung 49 auf. Zumindest für einen Abschnitt der jeweiligen Erstreckung der Seitenflanken 45, 46, 47, 48 ist dies der Fall, wobei sich dieser Abschnitt der Erstreckung der jeweiligen Seitenflanke 45, 46, 47, 48 vorzugsweise über einen Großteil, d.h. zumindest mehr als 50%, der Höhe h1, h2 der Zähne 40, 41 erstreckt.

Vorzugsweise sind die Seitenflanken 45 bis 48 hierbei nicht parallel zur Öffnungsrichtung 49 ausgerichtet, um den gegenseitigen Eingriff des Gegenfeststellteils 18 mit dem Feststellteil 17 zu erleichtern (um über größere Bereiche der Positionierung der Lenksäule ein ordnungsgemäßes Schließen der Fixiereinrichtung zu ermöglichen).

Vorzugsweise liegen die Neigungswinkel 52 der Seitenflanken 45 bis 48 in einem Bereich, der zu einer Selbsthemmung des Zahneingriffs zwischen den Zähnen 40, 41 bei einer in die Verstellrichtung 39, in welcher die Zähne 40, 41 die Verstellung der Lenksäule blockieren, wirkenden Kraft kommt. Die maximalen Neigungswinkel 52, bis zu denen ein solcher selbsthemmender Zahneingriff vorliegt, hängen hierbei insbesondere von der Materialpaarung ab und davon, ob die Oberflächen gefettet sind.

In einer vorteilhaften Ausführungsform der Erfindung bestehen die Zähne 40, 41 aus Sintermetall oder Stahl und sind ungefettet. Der maximale Neigungswinkel 52, bis zu dem eine Selbst- ' hemmung eintritt, liegt dann im Bereich von 8 bis 10,5°.

Wenn die Zähne 40, 41 aus einer Aluminium-Legierung bestehen (und ungeschmiert sind), so liegt der maximale Neigungswinkel 52, bis zu dem eine Selbsthemmung eintritt, im Bereich zwischen 11 und 15°.

Wenn der Neigungswinkel 52 etwas größer als der maximale Neigungswinkel ist, bis zu dem eine Selbsthemmung eintritt, so kommt es bei einer im geschlossenen Zustand der Fixiereinrichtung 10, in welchem Zähne 40, 41 in Eingriff stehen, im Falle einer in die Verstellrichtung wirkenden Kraft zu einer die Haftreibung übersteigenden Kraftkomponente in die Öffnungsrichtung 49, sodass insgesamt eine in die Öffnungsrichtung 49 wirkende Kraft auftritt. Dadurch, dass die Konstruktion mit einer entsprechenden Stabilität ausgebildet wird, können solche Kräfte bis zu einer gewissen Größe aufgenommen werden, ohne die Zähne 40, 41 außer Eingriff zu bringen. Die Lenksäule kann hierbei umso leichter ausgebildet werden, je geringer diese für einen vorgegebenen Maximalwert der in die Verstellrichtung 39 wirkenden Kraft in die Öffnungsrichtung 49 wirkenden Kraft ist.

Vorzugsweise sind die Neigungswinkel 52 der Seitenflanken 45 bis 48 der Zähne 40, 41 zumindest in einem Abschnitt ihrer Erstreckung, der sich vorteilhafterweise über einen Großteil der Höhen h1, h2 der Zähne 40, 41 erstreckt, weniger als 5° größer als der maximale Neigungswinkel 52, für den bei der vorgegebenen Materialpaarung, Oberflächenbeschaffenheit und Schmierung der Zähne 40, 41 eine Selbsthemmung eintritt.

Der maximale Neigungswinkel, bis zu dem Selbsthemmung eintritt, wird dadurch berechnet, dass bei einer in die Verstellrichtung 39 wirkenden Kraft die Kraftkomponente, die im Sinne eines gegenseitigen Abrutschens der Seitenflanken der Zähne 40, 41 wirkt, mit der Haftreibungskraft gleichgesetzt wird. Die Haftreibungskraft R ist gegeben durch µ. Q, wobei Q die rechtwinklig auf die Reibfläche wirkende Normalkraft und µ die Reibungszahl ist. Der maximale Neigungswinkel 52, bis zu dem eine Selbsthemmung eintritt, ist somit gegeben durch tan α = µ, wobei α der Neigungswinkel 52 ist. '

Denkbar und möglich wäre es auch, anstelle des Gegenfeststellteils 18 das Feststellteil 17 um die Wippachse 44 verschwenkbar zu lagern.

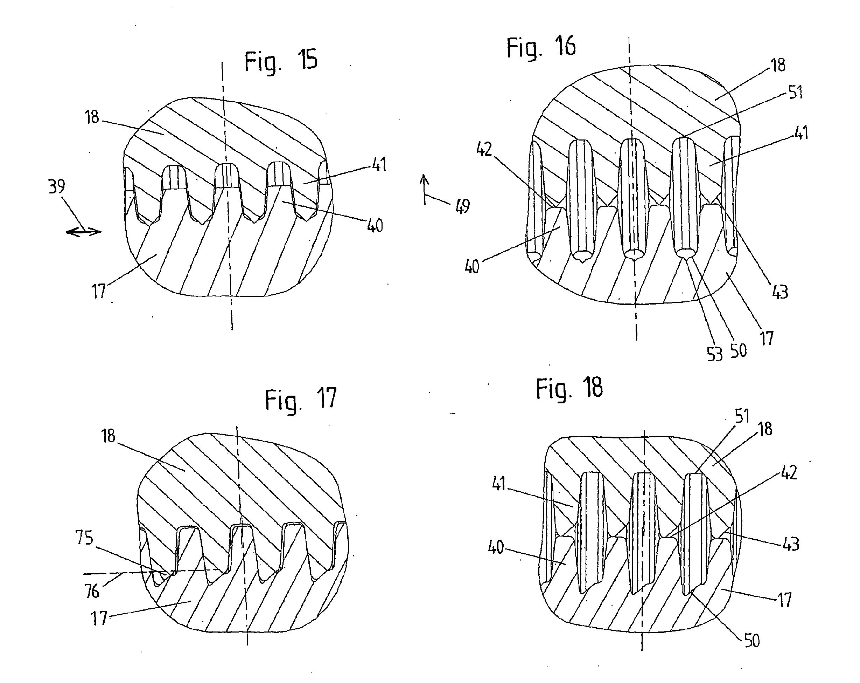

Die Fig. 15 und 16 sowie 17 und 18 zeigen zwei erfindungsgemäße Ausführungsformen der Zähne 41 und der Böden 50 der Zahnzwischenräume zwischen den Zähnen 40, um eine Spielfreiheit in die Verstellrichtung 39 zu erzielen (trotz des Spiels zwischen den Seitenflanken 45, 46 und 47, 48). Bei der Ausführungsform gemäß den Fig. 15 und 16 sind die einen Zähne, beispielsweise die Zähne 41 im Bereich ihrer Kämme 43 im Querschnitt parallel zur Verstellrichtung 39 und parallel zur Öffnungsrichtung 49 gesehen keilförmig ausgebildet und in den Böden der Zahnzwischenräume zwischen den anderen Zähnen, beispielsweise in den Böden 50 der Zahnzwischenräume zwischen den Zähnen 40 sind im Querschnitt durch die Zähne gesehen entsprechende V-förmige Vertiefungen 53 vorhanden, die die Keile im vollständigen Eingriff der Zähne 40, 41 aufnehmen.

Vorzugsweise sind die Keilformen der Kämme 43 wie abgebildet stumpf, d. h. der Öffnungswinkel der Keilformen liegt über 45°, vorzugsweise über 60°. Die die keilförmigen Kämme 43 aufnehmenden Vertiefungen 53 können auch nur abschnittsweise V-förmig ausgebildet sein und beispielsweise an ihren tiefsten Stellen Schmutzsäcke aufweisen.

In der Ausführungsform gemäß den Fig. 17 und 18 weisen die einen Zähne, beispielsweise die Zähne 41 in einem Querschnitt parallel zur Verstellrichtung 39 und parallel zur Öffnungsrichtung 49 gesehen im Bereich ihrer freien Enden bzw. Kämme 43 Abschrägungen auf, die von im Querschnitt durch die Zähne gesehen abgeschrägten Böden 50 der Zahnzwischenräume zwischen den anderen Zähnen, beispielsweise den Zähnen 40 im vollständigen Eingriff der Zähne 40,41 aufgenommen werden. Die Abschrägungen der Kämme 43 bzw. Böden 50 weisen vorzugsweise gegenüber einer rechtwinklig zur Öffnungsrichtung 49 liegenden Ebene 75 Neigungswinkel 76 auf, die kleiner als 60°, vorzugsweise kleiner als 45° sind.

Bei den Ausführungsformen der Fig. 15 bis 18 könnten auch nur ein Teil der Zähne 41 solche Keilformen bzw. Abschrägungen aufweisen, die mit V-förmigen Vertiefungen 53 bzw. abgeschrägten Böden 50 zusammenwirken. Die Keilformen bzw. Abschrägungen können an den Kämmen der Zähne 40, 41 des Feststellteils und/oder des Gegenfeststellteils angeordnet sein.

Aufgrund des Spiels zwischen den Seitenflanken 45, 46 und 47, 48 wird zumindest auf einer Seite eines jeweiligen Zahns 40, 41 trotz der geringen Neigungswinkel eine Verkeilung der Zähne 40, 41 beim Schließen der Fixiereinrichtung vermieden, welche das Öffnen der Fixiereinrichtung behindern würde. Dennoch wird im Normalbetrieb eine Spielfreiheit gewährleistet.

Wenn, insbesondere im Crash-Fall hohe Kräfte auftreten, so können diese von den zusammenwirkenden Seitenflanken der Zähne aufgenommen werden (gegebenenfalls nach Überwindung des zwischen ihnen vorliegenden Spiels).

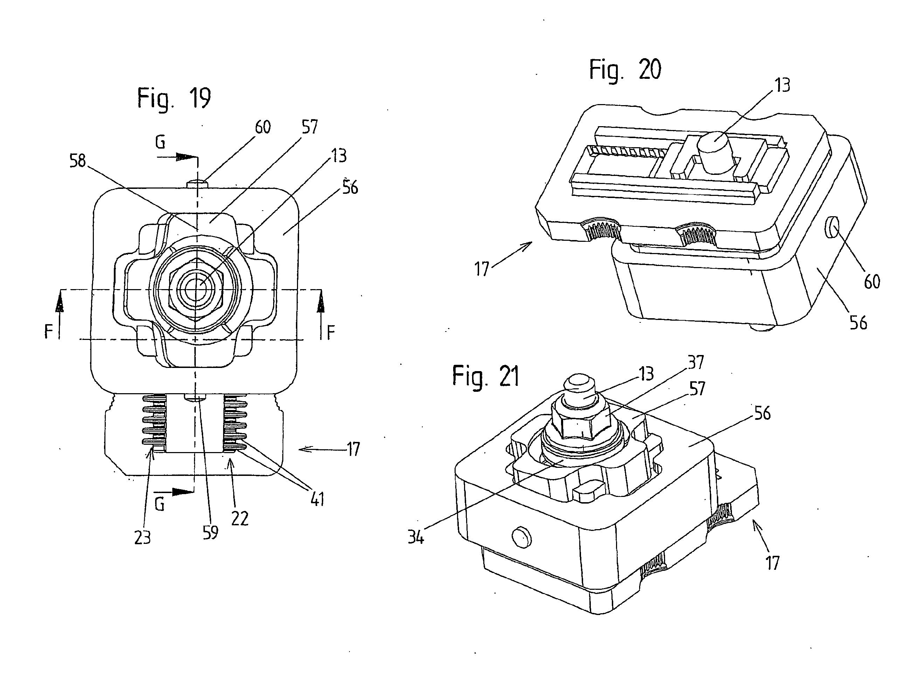

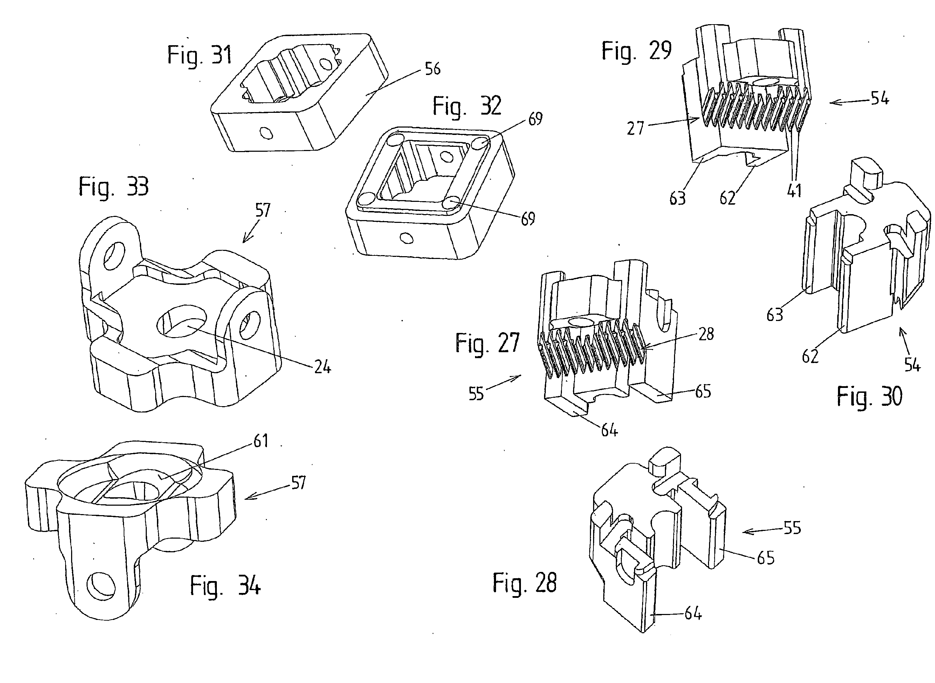

In einem zweiten Ausführungsbeispiel einer Lenksäule ist die Fixiereinrichtung 10 modifiziert ausgebildet, wie dies in den Fig. 19 bis 34 dargestellt ist. Abgesehen von den im Folgenden beschriebenen Änderungen entspricht die Lenksäule gemäß diesem Ausführungsbeispiel der zuvor anhand der Fig. 1 bis 14 beschriebenen Lenksäule.

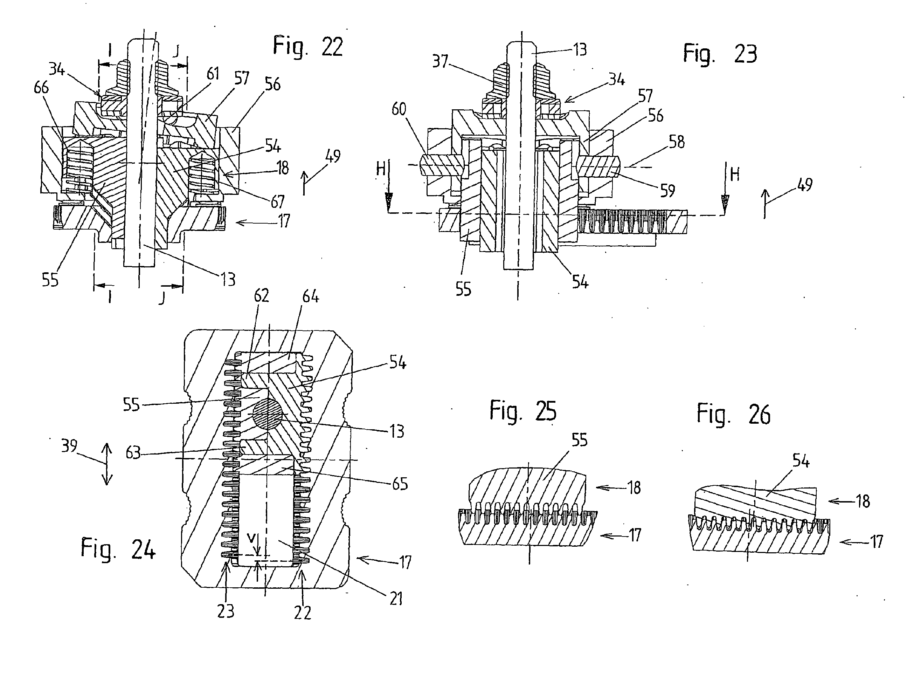

Das mit dem Feststellteil 17 zusammenwirkende Gegenfeststellteil 18 ist in diesem Ausführungsbeispiel zweiteilig ausgebildet und besitzt ein erstes und ein zweites Stößelteil 54, 55. Am Stößelteil 54 ist die erste Gegenverzahnung 27 angeordnet und am zweiten Stößelteil 55 ist die zweite Gegenverzahnung 28 angeordnet. Die Stößelteile sind in der Öffnungsrichtung 49 verschiebbar in einem käfigartigen Führungsteil 56 gelagert. Ein Betätigungsteil 57 ist um eine Schwenkachse 68 verschwenkbar am Führungsteil 56 gelagert. Hierbei ragen in Bohrungen im Betätigungsteil 57 festgelegte Schwenkbolzen 59, 60 (vgl. z.B. Fig. 23) in Lagerbohrungen im Führungsteil 56.

Eine vom Gegenfeststellteil 18 abgewandte konvexe Anlagefläche 61 des Betätigungsteils 57 wirkt mit einem wiederum als Achsial-Lager ausgebildeten Anlageteil 34 zusammen, welches beim Öffnung und Schließen der Fixiereinrichtung 10 in achsialer Richtung des Fixierbolzens 13 verschoben wird.

Zwischen dem Führungsteil 56 und den Stößelteilen 54, 55 sind Federn 66, 67 angeordnet, die im geöffneten Zustand der Fixiereinrichtung die Stößelteile 54, 55 in gleichen Abständen vom Feststellteil 17 und das Betätigungsteil 57 in seiner unverschwenkten Mittel-Lage halten. Weiters ragen zwischen dem Führungsteil 56 und dem Feststellteil 17 wirkende Schraubenfedern (nicht dargestellt in den Fig. 19 bis 34) in Sacklochbohrungen 69 des Führungsteils 56 und stützen dieses vom Feststellteil 17 ab.

Das Feststellteil 17 mit seinen Verzahnungen 22, 23 und die Gegenverzahnungen 27, 28 an den Stößelteilen 54, 55 des Gegenfeststellteils 18 sind in der bereits zuvor beschriebenen Weise ausgebildet. Beim Schließen der Fixiereinrichtung 10 wird das Anlageteil 34 an das Betätigungsteil 57 angedrückt. Wenn die Zähne 41 einer der beiden Gegenverzahnungen 27, 28 der Stößelteile 54, 55 mit den Zähnen 40 einer der Verzahnungen 22, 23 in Eingriff gelangen können, so verschwenkt sich das Betätigungsteil 57 um die Schwenkachse 58, um das entsprechende Stößelteil 54, 55 entgegen der Öffnungsrichtung 49 zu verschieben und dessen Zähne 41 mit den Zähnen 40 in Eingriff zu bringen. Für die Zähne 41 des anderen Stößelteils 54, 55 liegt dagegen eine "Zahn-auf-Zahn"-Stellung zu den gegenüberliegenden Zähnen 40 des Feststellteils 17 vor.

Fortsätze 62 bis 65 der Stößelteile 54, 55 dienen zur Führung der Stößelteile 54, 55 an den Rändern der Öffnung 21 im Feststellteil 17, wodurch die Verdrehsicherung des Gegenfeststellteils 18 und ein geringes Spiel gegenüber dem Feststellteil 17 erreicht wird. Der Fixierbolzen 13 wird von wannenförmigen Ausnehmungen an den einander zugewandten Seiten der Stößeiteile 54, 55 aufgenommen.

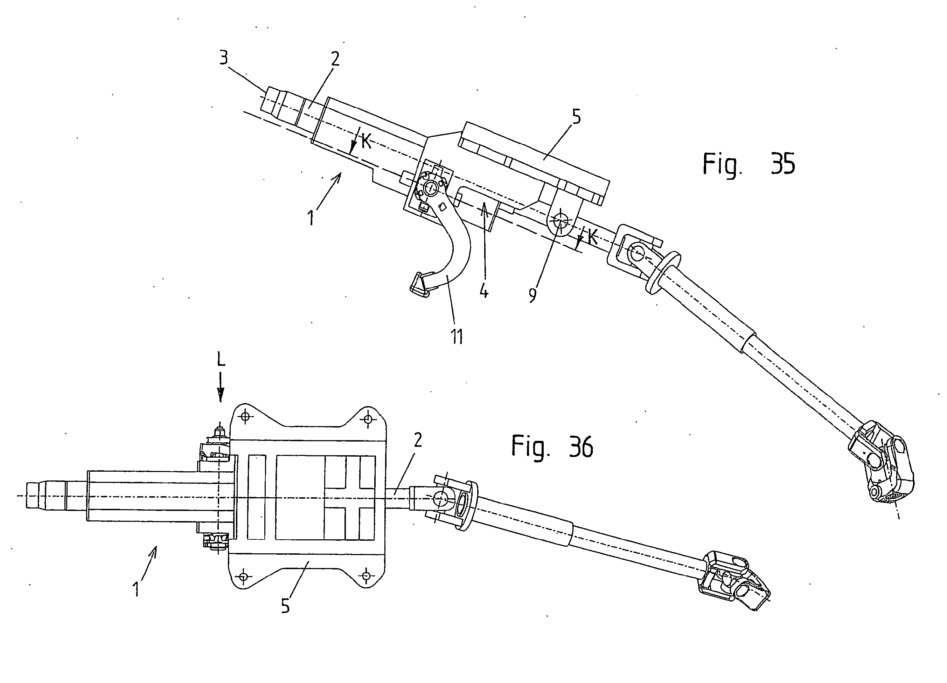

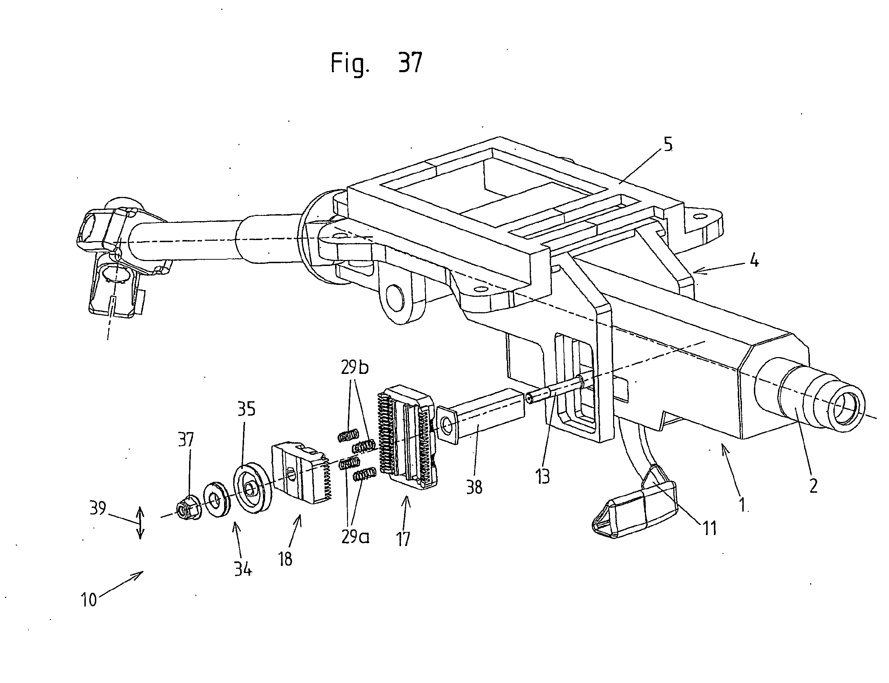

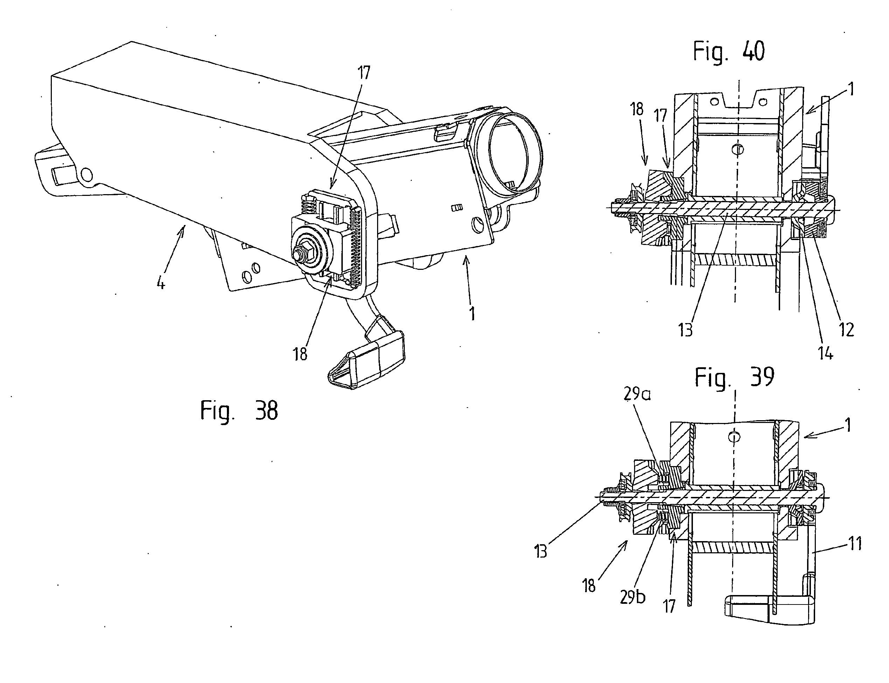

Ein weiteres Ausführungsbeispiel einer Lenksäule ist in den Fig. 35 bis 56 dargestellt. Abgesehen von den im Folgenden beschriebenen Änderungen ist die Lenksäule gemäß diesem Ausführungsbeispiel entsprechend dem bereits anhand der Fig. 1 bis 14 beschriebenen Ausführungsbeispiel ausgebildet.

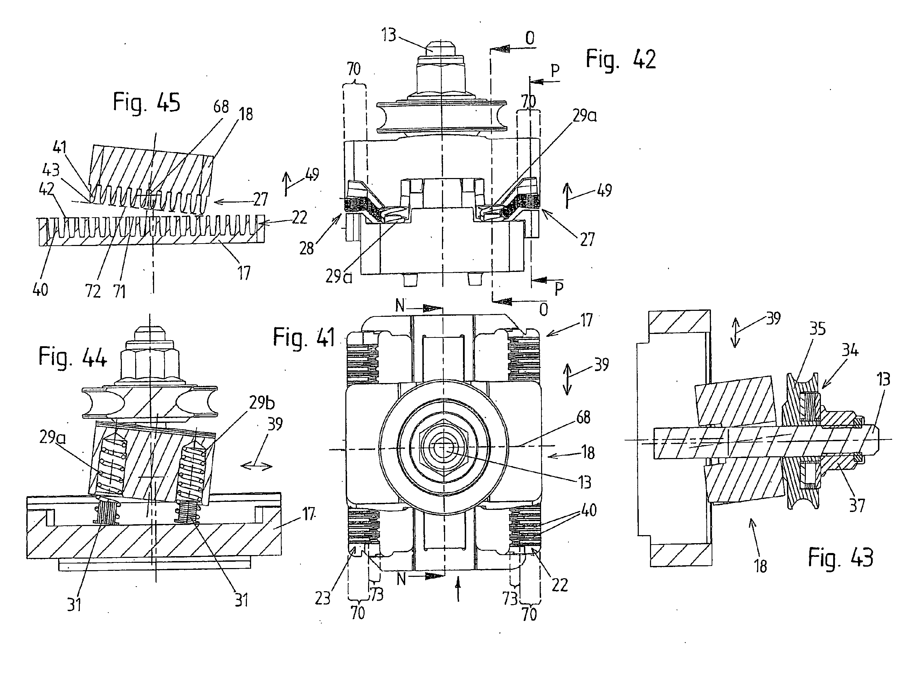

Der wesentliche Unterschied zum Ausführungsbeispiel gemäß den Fig. 1 bis 14 besteht darin, dass sich das Gegenfeststellteil 18 beim Schließen der Fixiereinrichtung 10 zusätzlich um eine Querachse 68 verschwenkt, die rechtwinklig zur Verstellrichtung 39 und rechtwinklig zur Öffnungsrichtung 49 liegt. Im geöffneten Zustand der Fixiereinrichtung 10, der in den Fig. 41 bis 45 dargestellt ist, ist das Gegenfeststellteil 18 gegenüber dem Feststellteil 17 um die Querachse 68 in eine Schrägstellung verschwenkt. Die gedachten Linien 71, 72, die im Querschnitt durch die Zähne gesehen (entsprechend Fig. 45), die freien Enden der Zähne 40, 41 der Verzahnungen 22, 23 bzw. der Gegenverzahnungen 27, 28 verbinden, stehen somit winklig zueinander. Diese Schrägstellung wird im gezeigten Ausführungsbeispiel dadurch erreicht, das die Federn 29 zwischen dem Feststellteil 17 und dem Gegenfeststellteil 18 verschieden lang ausgebildet sind. Die zwei in Bezug auf die Verstellrichtung 39 auf der einen Seite des Fixierbolzens 13 liegenden Federn 29a sind länger als die andern beiden Federn 29b. Diese Funktion kann auch durch eine entsprechend geformte Blattfeder mit Federarmen erfüllt werden.

Die Kämme 42 der Zähne 40 der ersten Verzahnung 22 und der zweiten Verzahnung 23 weisen in diesem Ausführungsbeispiel V-förmig zueinander stehende Einrast-Abschnitte 73 auf und beidseitig schließen an diese V-förmig zueinander stehenden Einrast-Abschnitte 73 Such-abschnitte 70 an, in welchen die Kämme 42 der Zähne 40 der ersten Verzahnung 22 und der zweiten Verzahnung 23 in der gleichen Ebene liegen (vgl. z.B. Fig. 41 und 42). Die Gegenverzähnungen 27, 28 sind in korrespondierender Weise ausgebildet.

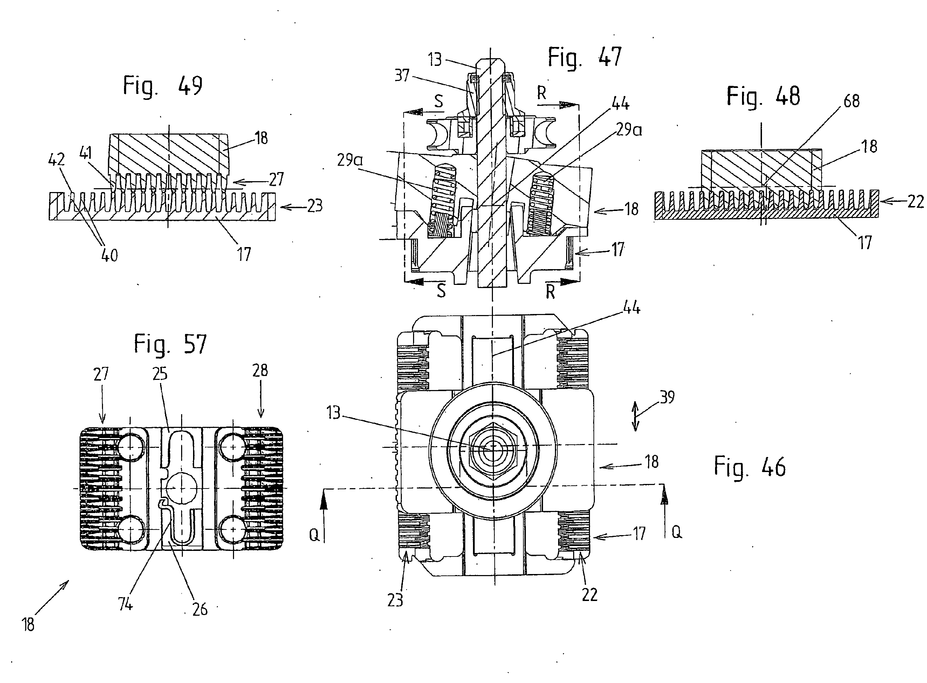

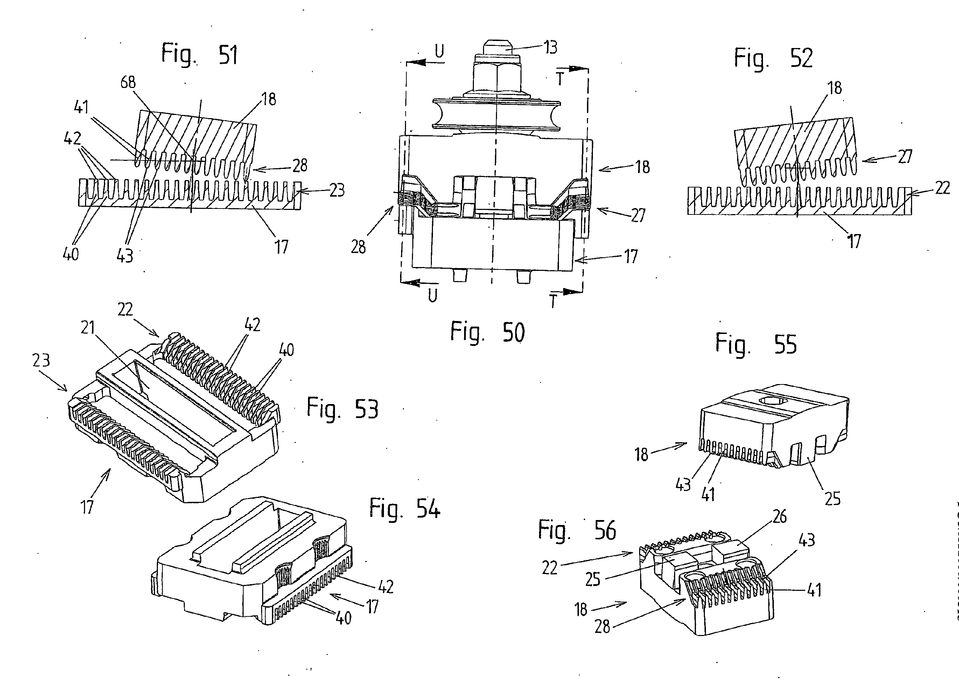

Wenn beim Schließen der Fixiereinrichtung die freien Enden bzw. Kämme 43 der Zähne 41 beispielsweise der ersten Gegenverzahnung 27 auf die Kämme 42 der Zähne 40 der ersten Verzahnung 22 treffen, wie, dies in Fig. 51 dargestellt ist, so kommt es beim weiteren Schließen der Fixiereinrichtung zur Verschwenkung des Gegenfeststellteils 18 um die Querachse 68 bis im geschlossenen Zustand eine bezogen auf den Querschnitt durch die Zähne 40, 41 parallele Stellung des Gegenfeststellteils 18 zum Feststellteil 17 erreicht ist (vgl. Fig. 46 bis 49).

Gleichzeitig kommt es beim weiteren Schließen ausgehend von dem in den Fig. 50 bis 52 dargestellten Zustand zu einer Verschwenkung des Gegenfeststellteils 18 um die Wippachse 44 (vgl. Fig. 46 und 47), wie dies bereits beim Ausführungsbeispiel gemäß den Fig. 1 bis 14 erläutert worden ist.

Wenn eine solche Einstellung in Bezug auf die Verstelleinrichtung 39 vorliegt, dass beim Schließen der Fixiereinrichtung bei beiden Verzahnungen 22, 23 und Gegenverzahnungen 27, 28 zunächst "Kopf-auf-Kopf"-Stellungen vorliegen, so wird sich beim weiteren Schließen der Fixiereinrichtung durch die Verschwenkung des Gegenfeststellteils 18 um die Querachse 68 diese " Kopf-auf-Kopf"-Stellung entweder für die erste Verzahnung 22 und erste Gegenverzahnung 27 oder für die zweite Verzahnung 23 und zweite Gegenverzahnung 28 aufheben, worauf es beim weiteren Schließen der Fixiereinrichtung zu einem Zahneingriff zwischen diesen Zähnen 40, 41 der entsprechenden Verzahnung 22, 23 und Gegenverzahnung 27, 28 kommt. Hierbei erfolgt dann auch wiederum eine Verschwenkung des Gegenfeststellteils um die Wippachse 44. '

Beim In-Eingriff-Bringen der Zähne 40, 41 greifen zunächst die Such-Abschnitte 70 ineinander ein und in der Folge die Einrast-Abschnitte 73.

Die Fixiereinrichtung 10 kann dadurch in beliebigen Verstellpositionen des Gegenfeststellteils 18 gegenüber dem Feststellteil 17 bezogen auf die Verstellrichtung 39 geschlossen werden, wobei es gegebenen falls zu einer geringfügigen Verschiebung des Gegenfeststellteils 18 gegenüber dem Feststellteil 17 in die Verstellrichtung 39 kommt.

Die Einrast-Abschnitte der Zähne 40, 41 sind gleich wie im anhand der Fig. 1 bis 14 beschriebenen Ausführungsbeispiel ausgebildet, wobei sich die Neigungswinkel der Gegenverzahnungen hier auf den geschlossenen Zustand der Fixiereinrichtung beziehen, in welcher die Verschwenkung des Gegenfeststellteils 18 um die Querachse 68 aufgehoben ist.

Die Such-Abschnitte 70 können mit den gleichen Neigungen der Seitenflanken ausgebildet sein, wobei vorzugsweise die Zwischenräume zwischen den Zähnen 40, 41 in diesen Such-Abschnitten 70 etwas größer als in den Einrast-Abschnitten 73 sind, so dass im Eingriff der Einrast-Abschnitte 73 die Such-Abschnitte 70 ein geringes gegenseitiges Spiel aufweisen.

Denkbar und möglich wäre es auch, anstelle des Gegenfeststellteils 18 das Feststellteil 17 um die Querachse 68 verschwenkbar auszubilden, sodass dieses im geöffneten Zustand der Fixiereinrichtung um die Querachse 68 verkippt ist.

Das Anlageteil 34 ist zweiteilig ausgebildet und umfaßt ein Achsiallager und eine Scheibe 35 mit einer am Umfang angeordneten Nut. In diese kann eine Gewichtsausgleichfeder zum Halten des Gewichts der Lenksäule im geöffneten Zustand der Fixiereinrichtung eingreifen (nicht dargestellt in den Figuren).

Die Fixierung in Richtung der Längenverstellung der Lenksäule erfolgt in den gezeigten Ausführungsbeispielen reibschlüssig. Im geschlossenen Zustand der Fixiereinrichtung 10 sind die Seitenwangen 6, 7 an die Seitenflächen der Manteleinheit 1 angedrückt, wodurch die Längenverstellung der Lenksäule reibschlüssig fixiert ist.

Es könnten zur Fixierung der Längenverstellung der Lenksäule auch mehrere nach Art einer Lamellenkupplung zusammenwirkende, an Lamellen angeordnete Reibflächen vorhanden sein. Auch eine formschlüssige Fixierung über zusammenwirkende Verzahnungen ist denkbar und möglich.

In den gezeigten Ausführungsbeispielen ist nur ein Feststellteil und ein Gegenfeststellteil auf einer Seite der Manteleinheit 1 vorhanden, Statt dessen könnten zur Fixierung der Winkelverstellung bzw. Höhenverstellung der Lenksäule auch auf beiden Seiten der Manteleinheit Feststellteile und mit ihnen zusammenwirkende Gegenfeststellteile gemäß der Erfindung vorhanden sein.

Die Erfindung wurde im Zusammenhang mit einer Fixierung der Winkelverstellung bzw. Höhenverstellung einer Lenksäule beschrieben. In der erfindungsgemäßen Weise könnte statt dessen auch die Längenverstellung der Lenksäule fixiert werden. Auch sowohl die Winkel- bzw. Höhenverstellung als auch die Längenverstellung der Lenksäule können in der erfindungsgemäßen Weise fixiert werden. Hierbei kann auch vorgesehen sein, dass der Fixierbolzen 13 die Lenksäule nicht vollkommen durchsetzt, sondern nur in die Manteleinheit 1 hineinragt, wobei das Feststellteil und das Gegenfeststellteil zur Fixierung der Längenverstellung innerhalb der Manteleinheit 1 angeordnet sind. Es könnte hierbei auch eine zusätzliche Führungseinheit zwischen der Manteleinheit 1 und der Trageinheit 4 vorhanden sein, welche die Manteleinheit in Längsrichtung der Lenkspindel verschiebbar führt und die gegenüber der Trageinheit um die Schwenkachse für die Winkel- bzw. Höhenverstellung verschwenkbar ist. Solche Konstruktionen sind bekannt, beispielsweise aus dem in der Beschreibungseinleitung zitierten Stand der Technik.

Unterschiedliche weitere Modifikationen der gezeigten Ausführungsbeispiele sind denkbar und möglich, ohne den Bereich der Erfindung zu verlassen. So wird beispielsweise in den beschriebenen Ausführungsbeispielen die Fixiereinrichtung durch Verschwenkung eines Betätigungshebels geschlossen, wobei eine Nockenscheiben 12 mit einer Kulissenscheibe 14 zusammenwirkt. Auch andere manuelle Betätigungseinrichtungen können vorgesehen sein, um zum Schließen der Fixiereinrichtung eine entgegen der Öffnungsrichtung 49 auf das Gegenfeststellteil 18 wirkende Kraft bereitzustellen. Auch eine motorische Betätigung der Fixiereinrichtung ist denkbar und möglich.

Obwohl eine zumindest abschnittsweise V-Stellung der Verzahnungen 22, 23 und Gegenverzahnung 27, 28 bevorzugt ist, könnten diese auch parallel zueinander ausgerichtet sein.

Denkbar und möglich wäre es auch, dass das Feststellteil 17 nur eine Verzahnung und das Gegenfeststellteil 18 nur eine mit der Verzahnung des Feststellteils zusammenwirkende Gegenverzahnung aufweist. Ein Vorteil einer Ausbildung nach Art einer Wippe besteht darin, dass der achsiale Verstellweg des Fixierbolzens 13 geringer als bei gradlinigen Verstellungen des Gegenfeststellteils 18 ist.

Weiters ist es vorteilhaft, eine Federeinrichtung vorzusehen, die zwischen dem Feststellteile und dem Gegenfeststellteil wirkt, um die Fortsätze 25, 26 des Gegenfeststellteils an einen Seitenrand der Öffnung 21 im Feststellteil 17 anzudrücken (in Richtung rechtwinklig zur Verstellrichtung 39), um eine genaue Parallelstellung der Zähne 40 und 41 zu erhalten. Eine Ausbildung eines Gegenfeststellteils mit einer derartigen Spannfeder 74 ist in Fig. 57 dargestellt. Die Spannfeder 74 ist in einer Ausnehmung eines Fortsatzes 26 angeordnet und steht über diesen zur Anlage am Feststellteil 17 seitlich vor.

### Legende

### zu den Hinweisziffern:

- 1: Manteleinheit
- 2: Lenkspindel
- 3: Ende
- 4: Trageinheit
- 5: Halteteil
- 6: Seitenwange
- 7: Seitenwange
- 8: Längsachse
- 9: Schwenkachse
- 10: Fixiereinrichtung
- 11: Betätigungshebel
- 12: Nockenscheibe
- 13: Fixierbolzen
- 14: Kulissenscheibe
- 15: Langloch
- 16: Langloch
- 17: Feststellteil
- 18: Gegenfeststellteil
- 19: Vertiefung
- 20: Mulde
- 21: Öffnung
- 22: erste Verzahnung
- 23: zweite Verzahnung
- 24: Öffnung
- 25: Fortsatz
- 26: Fortsatz
- 27: erste Gegenverzahnung
- 28: zweite Gegenverzahnung
- 29: Feder
- 30: Sackloch
- 31: Gleitschuh
- 32: Gleitfläche
- 33: Anlagefläche
- 34: Anlageteil
- 35: Scheibe
- 36: Ring
- 37: Abstützteil
- 38: Führungshülse
- 39: Verstellrichtung
- 40: Zahn
- 41: Zahn
- 42: Kamm
- 43: Kamm
- 44: Wippachse
- 45: Seitenflanke
- 46: Seitenflanke
- 47: Seitenflanke
- 48: Seitenflanke
- 49: Öffnungsrichtung
- 50: Boden
- 51: Boden
- 52: Neigungswinkel
- 53: Vertiefung
- 54: Stößelteil
- 55: Stößelteil
- 56: Führungsteil
- 57: Betätigungsteil
- 58: Schwenkachse
- 59: Schwenkbolzen
- 60: Schwenkbolzen
- 61: Anlagefläche
- 62: Fortsatz
- 63: Fortsatz
- 64: Fortsatz
- 65: Fortsatz
- 66: Feder
- 67: Feder
- 68: Querachse
- 69: Sacklochbohrung
- 70: Such-Abschnitt
- 71: Linie
- 72: Linie
- 73: Einrast-Abschnitt
- 74: Spannfeder
- 75: Ebene
- 76: Neigungswinkel

## Patentansprüche

1. Verstellbare Lenksäule für ein Kraftfahrzeug, die eine Fixiereinrichtung (10) aufweist, in deren geöffnetem Zustand die Lenksäule in mindestens eine Verstellrichtung verstellbar ist und in deren geschlossenem Zustand die eingestellte Position der Lenksäule fixiert ist und die für die Verstellrichtung bzw. für mindestens eine der Verstellrichtungen (39) zur Fixierung der eingestellten Position mindestens ein Feststellteil (17), welches zumindest eine Verzahnung (22, 23) mit Zähnen (40) besitzt, und mindestens ein Gegenfeststellteil (18) aufweist, welches zumindest eine Gegenverzahnung (27, 28) mit Zähnen (41) besitzt, wobei im geschlossenen Zustand der Fixiereinrichtung Zähne (40) des Feststellteils (17) mit Zähnen (41) des Gegenfeststellteils (18) im Eingriff sind und beim Öffnen der Fixiereinrichtung (10) sich das Gegenfeststellteil (18) vom Feststellteil (17) in eine Öffnungsrichtung (49) abhebt und im geöffneten Zustand der Fixiereinrichtung (10) die Zähne (41) des Gegenfeststellteils (18) außer Eingriff mit den Zähnen (40) des Feststellteils (17) sind und wobei in einem Querschnitt, dessen Ebene parallel zur Verstellrichtung (39) und parallel zur Öffnungsrichtung (49) liegt, durch die Zähne (40, 41) des Feststellteils (17) und des Gegenfeststellteils (18) gesehen, beide Seitenflanken (45, 46; 47, 48) der Zähne (40, 41) des Feststellteils (17) und des Gegenfeststellteils (18) im geschlossenen Zustand der Fixiereinrichtung (10) zumindest in einem Abschnitt ihrer Erstreckung Neigungswinkel (52) von weniger als 20°, vorzugsweise weniger als 12°, mit der Öffnungsrichtung (49) einschließen, **dadurch gekennzeichnet, dass** zumindest einige der Zähne des Feststellteils (17) oder des Gegenfeststellteils (18) im Querschnitt durch die Zähne (40, 41) gesehen an ihren freien Enden, vorzugsweise stumpfe, Keilformen aufweisen, die bei einem Eingriff mit den Zähnen (41, 40) des Gegenfeststellteils (18) bzw. Feststellteils (17) im geschlossenen Zustand der Fi- ' xiereinrichtung (10) in zumindest abschnittsweise V-förmige Vertiefungen (53) in den Böden (51, 50) der Zahnzwischenräume zwischen diesen Zähnen (41, 40) ragen, oder zumindest einige der Zähne (40, 41) des Feststellteils (17) oder des Gegenfeststellteils (18) im Querschnitt durch die Zähne (40, 41) gesehen im Bereich ihrer freien Enden jeweils eine Abschrägung (43) aufweisen, die bei einem Eingriff mit den Zähnen (41, 40) des Gegenfeststellteils (18) bzw. Feststellteils (17) im geschlossenen Zustand der Fixiereinrichtung (10) an abgeschrägt ausgebildeten Böden (51, 50) der Zahnzwischenräume dieser Zähne (41, 40) anliegen.

2. Verstellbare Lenksäule nach Anspruch 1, **dadurch gekennzeichnet, dass** dieser Abschnitt der Erstreckung der jeweiligen Seitenflanke (45, 46; 47,48), indem diese einen Neigungswinkel (52) von weniger als 20°, vorzugsweise weniger als 12°, mit der Öffnungsrichtung (49) einschließt, sich über einen Großteil der Höhe (h1, h2) der Zähne (40, 41) erstreckt.

3. Verstellbare Lenksäule nach Anspruch 1 oder Anspruch 2, **dadurch gekennzeichnet, dass** die Neigungswinkel (52) der Seitenflanken (45, 46; 47, 48) der Zähne (40, 41) zur Öffnungsrichtung (49) weniger als 5° über dem maximalen Neigungswinkel liegen, bis zu dem der Zahneingriff zwischen dem Feststellteil (17) und dem Gegenfeststellteil (18) im geschlossenen Zustand der Fixiereinrichtung bei einer in die Verstellrichtung (39), in der das Feststellteil (17) und das Gegenfeststellteil (18) die Verstellung der Lenksäule fixieren, wirkenden Kraft selbsthemmend ist.

4. Verstellbare Lenksäule nach einem der Ansprüche 1 bis 3, **dadurch gekennzeichnet, dass** der Zahneingriff zwischen dem Feststellteil (17) und dem Gegenfeststellteil (18) bei einer in - die Verstellrichtung (39), in der das Feststellteil (17) und Gegenfeststellteil (18) die Verstellung der Lenksäule fixieren, wirkenden Kraft selbsthemmend ausgebildet ist.

5. Verstellbare Lenksäule nach einem der Ansprüche 1 bis 4, **dadurch gekennzeichnet, dass** das Feststellteil (17) mindestens eine erste Verzahnung (22) und mindestens eine zweite Verzahnung (23) aufweist, die mit einer ersten Gegenverzahnung (27) bzw. einer zweiten Gegenverzahnung (28) des Gegenfeststellteils (18) zusammenwirken.

6. Verstellbare Lenksäule nach Anspruch 5, **dadurch gekennzeichnet, dass** in einem Querschnitt durch das Feststellteil (17) und Gegenfeststellteil (18) gesehen, wobei die Ebene dieses Querschnitts rechtswinklig zur Verstellrichtung (39) und parallel zur Öffnungsrichtung (49) liegt, die erste Verzahnung (22) und die zweite Verzahnung (23) und die erste Gegenverzahnung (27) und die zweite Gegenverzahnung (28) zumindest über einen Abschnitt der Längserstreckung der Zähen (40, 41) V-förmig zueinander stehen, wobei der Winkel zwischen der ersten Verzahnung (22) und der zweiten Verzahnung (23) gleich ist wie der Winkel zwischen der ersten Gegenverzahnung (27) und der zweiten Gegenverzahnung (28).

7. Verstellbare Lenksäule nach Anspruch 5 oder Anspruch 6, **dadurch gekennzeichnet, dass** zwischen den Zähnen (40) der ersten Verzahnung (22) und den Zähnen (40) der zweiten Verzahnung (23) oder zwischen den Zähnen (41) der ersten Gegenverzahnung (27) und den Zähnen (41) der zweiten Gegenverzahnung (28) in Verstellrichtung (39) ein Versatz (v) vorliegt, der einen Teil des Abstands (a) zwischen den Mitten von aufeinanderfolgenden Zähnen (40, 41) beträgt.

8. Verstellbare Lenksäule nach Anspruch 7, **dadurch gekennzeichnet, dass** der Versatz (v) die Hälfte des Abstands (a) zwischen den Mitten von aufeinanderfolgenden Zähnen (40, 41) beträgt.

9. Verstellbare Lenksäule nach Anspruch 8 oder Anspruch 9, **dadurch gekennzeichnet, dass** das Gegenfeststellteil (18) oder das Feststellteil (17) um eine Wippachse (44) verschwenkbar ist, die parallel zur Verstellrichtung (39) liegt, in welche das Gegenfeststellteil (18) bzw. das Feststellteil 17 wirkt, wobei sich beim Schließen der Fixiereinrichtung (10) das Gegenfeststellteil (18) bzw. das Feststellteil (17) zum Zahneingriff entweder zwischen den Zähnen (40) der ersten Verzahnung (22) mit den Zähnen (41) der ersten Gegenverzahnung (27) oder zwischen den Zähnen (40) der zweiten Verzahnung (23) mit den Zähnen (41) der zweiten Gegenverzahnung (28) um die Wippachse (44) verschwenkt.

10. Verstellbare Lenksäule nach Anspruch 8 oder Anspruch 9, **dadurch gekennzeichnet, dass** das Gegenfeststellteil (18) erste und zweite Stößelteile (54, 55) umfasst, wobei die erste Gegenverzahnung (27) am ersten Stößelteil (54) und die zweite Gegenverzahnung (28) am zweiten Stößelteil (55) angeordnet ist und die Stößelteile (54, 55) beim Schließen der Fixiereinrichtung (10) unabhängig voneinander entgegen der Öffnungsrichtung (49) verschiebbar sind.

11. Verstellbare Lenksäule nach Anspruch 10, **dadurch gekennzeichnet, dass** die Stößelteile (54, 55) verschiebbar in einem Führungsteil (56) gelagert ist, gegenüber dem ein Betätigungsteil (57) verschwenkbar gelagert ist, welches beim Schließen der Fixiereinrichtung (10) mit den Stößelteilen (54, 55) zur Verschiebung derselben entgegen der Öffnungsrichtung (49) zusammenwirkt.

12. Verstellbare Lenksäule nach einem der Ansprüche 1 bis 11, **dadurch gekennzeichnet, dass** das Gegenfeststellteil (18) oder das Feststellteil (17) um eine Querachse (68) verschwenkbar ist, die rechtwinklig zur Verstellrichtung (39), in welche das Gegenfeststellteil (18) wirkt, und rechtwinklig zur Öffnungsrichtung (49) liegt, und um die das Gegenfeststellteil (18) bzw. das Feststellteil (17) im geöffneten Zustand der Fixiereinrichtung (10) gegenüber dem Feststellteil (17) bzw. Gegenfeststellteil (18) in eine Schrägstellung verschwenkt ist.

13. Verstellbare Lenksäule nach Anspruch 12, **dadurch gekennzeichnet, dass** zwischen dem Feststellteil (17) und dem Gegenfeststellteil (18) angeordnete Federn (29a, 29b), die die beiden Teile (17, 18) im geöffneten Zustand der Fixiereinrichtung voneinander distanzieren, das Gegenfeststellteil (18) gegenüber dem Feststellteil (17) um die Querachse (68) in die im geöffneten Zustand der Fixiereinrichtung (10) vorliegende Schrägstellung verschwenken, wobei die Federn (29a, 29b) vorzugsweise unterschiedlich lang ausgebildete Schraubenfedern sind.

14. Verstellbare Lenksäule nach Anspruch 12 oder Anspruch 13, **dadurch gekennzeichnet, dass** die erste und zweite Verzahnung (22, 23) und die erste und zweite Gegenverzahnung (27, 28) beidseitig von im Querschnitt durch die Verzahnungen (22, 23, 27, 28) gesehen V-förmig zueinander stehenden Einrast-Abschnitten 73 parallel und in der gleichen Ebene liegende seitliche Such-Abschnitte aufweisen.

15. Verstellbare Lenksäule nach einem der Ansprüche 1 bis 14, **dadurch gekennzeichnet, dass** die Fixiereinrichtung (10) einen Fixierbolzen (13) umfasst, der das mindestens eine Feststellteil (17) und das mindestens eine Gegenfeststellteil (18) durch Öffnungen (21, 24) durchsetzt.

16. Verstellbare Lenksäule nach Anspruch 15, **dadurch gekennzeichnet, dass** auf dem Fixierbolzen (13) ein Anlageteil (34) zur Anlage an einer vom Feststellteil (17) abgewandten Anlagefläche (33) des Gegenfeststellteils (18) angeordnet ist, wobei das Gegenfeststellteil (18) im geschlossenen Zustand der Fixiereinrichtung (10) vom Anlageteil (34) an das Feststellteil (17) angedrückt ist.

17. Verstellbare Lenksäule nach Anspruch 16, **dadurch gekennzeichnet, dass** das Anlageteil (34) in Form eines Achsiallagers ausgebildet ist.

18. Verstellbare Lenksäule nach Anspruch 16 oder Anspruch 17, **dadurch gekennzeichnet, dass** die Anlagefläche (33) des Gegenfeststellteils (18) zum Anlageteil (34) hin konvex gebogen ausgebildet ist oder schrägstehende Flächen aufweist, die durch einen Scheitel oder einen gebogenen Bereich miteinander verbunden sind, an denen das Anlageteil (34) anliegt.

19. Verstellbare Lenksäule nach einem der Ansprüche 1 bis 18, **dadurch gekennzeichnet, dass** die Neigungswinkel (52) zwischen den Seitenflanken (45, 46, 47, 48) der Zähne (40, 41) des Feststellteils (17) und Gegenfeststellteils (18) und der Öffnungsrichtung (49) im geschlossenen Zustand der Fixiereinrichtung (10) mehr als 3° betragen.

20. Verstellbare Lenksäule nach einem der Ansprüche 1 bis 19, **dadurch gekennzeichnet, dass** zur Parallelstellung der Zähne (40, 41) des Feststellteils (17) und Gegenfeststellteils (18) eine zwischen dem Feststellteil und dem Gegenfeststellteil wirkende Federeinrichtung vorgesehen ist, die das Gegenfeststellteil (18) gegenüber dem Feststellteil (17) in eine rechtwinklig zur Verstellrichtung (39) stehende Richtung bis zu einem gegenseitigen Anschlag verschiebt.

## Claims

1. An adjustable steering column for a motor vehicle, having a fixing device (10) in the opened state of which the steering column is adjustable in at last one adjusting direction and in the closed state of which the adjusted position of the steering column is fixed, and having, for the adjusting direction or for at least one of the adjusting directions (39), at least one immobilising part (17), with at least one toothing (22, 23) with teeth (40), and at least one counter immobilising part (18), with at least one counter toothing (27, 28) with teeth (41), to fix the adjusted position, wherein teeth (40) of the immobilising part (17) engage teeth (41) of the counter immobilising part (41) in the closed state of the fixing device and the counter immobilising part (18) lifts from the immobilising part (17) in an opening direction (49) upon opening of the fixing device (10) and the teeth (41) of the counter immobilising part (18) are disengaged from the teeth (40) of the immobilising part (17) in the opened state of the fixing device (10), and wherein viewed in a cross-section, whose plane lies parallel to the adjusting direction (39) and parallel to the opening direction (49), through the teeth (40, 41) of the immobilising part (17) and of the counter immobilising part (18), both lateral flanks (45, 46; 47, 48) of the teeth (40, 41) of the immobilising part (17) and the counter immobilising part (18) form, in the closed state of the fixing device (10), an angle of inclination (52) of less than 20°, preferably less than 12°, with the opening direction (49) in at least a portion of their extension, **characterised in that** viewed in cross-section through the teeth (40, 41 the free ends of at least some of the teeth of the immobilising part (17) or the counter immobilising part (18) have wedge profiles, preferably blunt wedge profiles, which upon engagement with the teeth (41, 40) of the counter immobilising part (18) or immobilising part (17) as the case may be in the closed state of the fixing device (10) project into cavities (53), at least portions of which are V-shaped, in the bases (51 50) of the interdentiums between these teeth (41, 40), or at least some of the teeth (40, 41) of the immobilising part (17) or the counter immobilising part (18) each have, viewed in cross-section through the teeth (40, 41), a bevel (43) in the region of their free ends, which upon engagement with the teeth (41, 40) of the counter immobilising part (18) or immobilising part (17) as the case may be contacts bevelled bases (51, 50) of the interdentiums of these teeth (41, 40) in the closed state of the fixing device (10).

2. An adjustable steering column according to claim 1, **characterised in that** said portion of the extension of the respective lateral flank (45, 46; 47, 48), in which portion the latter forms an angle of inclination (52) of less than 20°, preferably less than 12°, with the opening direction (49), extends over a majority of the height (h1, h2) of the teeth (40, 41).

3. An adjustable steering column according to claim 1 or claim 2, **characterised in that** the angles of inclination (52) of the lateral flanks (45, 46; 47, 48) of the teeth (40, 41) with respect to the opening direction (49) lie less than 5° above the maximum angle of inclination up to which the tooth engagement between the immobilising part (17) and the counter immobilising part (18) in the closed state of the fixing device is self-locking in the event of a force acting in the adjusting direction (39) in which the immobilising part (17) and the counter immobilising part (18) fix the adjustment of the steering column.

4. An adjustable steering column according to any one of claims 1 to 3, **characterised in that** the tooth engagement between the immobilising part (17) and the counter immobilising part (18) is self-locking in the event of a force acting in the adjusting direction (39) in which the immobilising part (17) and the counter immobilising part (18) fix the adjustment of the steering column.

5. An adjustable steering column according to any one of claims 1 to 4, **characterised in that** the immobilising part (17) has at least one first toothing (22) and at least one second toothing (23), which cooperate with a first counter toothing (27) and a second counter toothing (28) respectively of the counter immobilising part (18).

6. An adjustable steering column according to claim 5, **characterised in that** viewed in a cross-section through the immobilising part (17) and the counter immobilising part (18), the plane of this cross-section lying at right angles to the adjusting direction (39) and parallel to the opening direction (49), the first toothing (22) and the second toothing (23) and the first counter toothing (27) and the second counter toothing (28) are in a V-shaped configuration relative to each other over at least a portion of the longitudinal extension of the teeth (40, 41), the angle between the first toothing (22) and the second toothing (23) being the same as the angle between the first counter toothing (27) and the second counter toothing (28).

7. An adjustable steering column according to claim 5 or claim 6, **characterised in that** in the adjusting direction (39), there is an offset (v) between the teeth (40) of the first toothing (22) and the teeth (40) of the second toothing (23) or between the teeth (41) of the first counter toothing (27) and the teeth (41) of the second counter toothing (28), which offset (v) amounts to part of the distance (a) between the centres of successive teeth (40, 41).

8. An adjustable steering column according to claim 7, **characterised in that** the offset (v) amounts to half the distance (a) between the centres of successive teeth (40, 41).

9. An adjustable steering column according to claim 8 or claim 9, **characterised in that** the counter immobilising part (18) or the immobilising part (17) is pivotable about a rocking axis (44) lying parallel to the adjusting direction (39) in which the counter immobilising part (18) or the immobilising part (17) as the case may be acts, wherein upon closure of the fixing device (10), the counter immobilising part (18) or the immobilising part (17) as the case may be pivots about the rocking axis (44) for tooth engagement either between the teeth (40) of the first toothing (22) and the teeth (41) of the first counter toothing (27) or between the teeth (40) of the second toothing (23) and the teeth (41) of the second counter toothing (28).

10. An adjustable steering column according to claim 8 or claim 9, **characterised in that** the counter immobilising part (18) comprises first and second tappet parts (54, 55), the first counter toothing (27) being arranged on the first tappet part (54) and the second counter toothing (28) on the second tappet part (55) and the tappet parts (54, 55) being displaceable against the opening direction (49) independently of one another upon closing of the fixing device (10).

11. An adjustable steering column according to claim 10, **characterised in that** the tappet parts (54, 55) are displaceably mounted in a guide part (56) with respect to which an actuating part (57) is pivotably mounted, which actuating part (57) cooperates, upon closing of the fixing device (10), with the tappet parts (54, 55) to displace the latter counter to the opening direction (49).

12. An adjustable steering column according to any one of claims 1 to 11, **characterised in that** the counter immobilising part (18) or the immobilising part (17) is pivotable about a transverse axis (68) which lies at right angles to the adjusting direction (39) in which the counter immobilising part (18) acts and at right angles to the opening direction (49) and about which the counter immobilising part (18) or the immobilising part (17) as the case may be is, in the opened state of the fixing device (10), pivoted into an inclined position with respect to the immobilising part (17) or counter immobilising part (18) as the case may be.

13. An adjustable steering column according to claim 12, **characterised in that** springs (29a, 29b), arranged between the immobilising part (17) and the counter immobilising part (18), which distance the two parts (17, 18) from one another in the opened state of the fixing device, pivot the counter immobilising part (18) with respect to the immobilising part (17) about the transverse axis (68) into the inclined position present in the opened state of the fixing device (10), the springs (29a, 29b) preferably being helical springs of differing length.

14. An adjustable steering column according to claim 12 or claim 13, **characterised in that** the first and second toothing (22, 23) and the first and second counter toothing (27, 28) have lateral search portions, lying parallel and in the same plane, on both sides of catching portions (73) which are in a V-shaped configuration relative to each other viewed in cross-section through the teeth (22, 23, 27, 28).

15. An adjustable steering column according to any one of claims 1 to 14, **characterised in that** the fixing device (10) comprises a fixing pin (13) which, through openings (21, 24), passes through the at least one immobilising part (17) and the at least one counter immobilising part (18).

16. An adjustable steering column according to claim 15, **characterised in that** a contact part (34) for contact against a contact surface (33), remote from the immobilising part (17), of the counter immobilising part (18) is arranged on the fixing pin (13), the counter immobilising part (18) being pressed against the immobilising part (17) by the contact part (34) in the closed state of the fixing device (10).

17. An adjustable steering column according to claim 16, **characterised in that** the contact part (34) is in the form of a thrust bearing.

18. An adjustable steering column according to claim 16 or claim 17, **characterised in that** the contact surface (33) of the counter immobilising part (18) is convexly curved towards the contact part (34) or has inclined surfaces connected to one another by an apex or a curved region, against which apex or curved region the contact part (34) rests.

19. An adjustable steering column according to any one of claims 1 to 18, **characterised in that** the angles of inclination (52) between the lateral flanks (45, 46, 47, 48) of the teeth (40, 41) of the immobilising part (17) and counter immobilising part (18) and the opening direction (49) are more than 3° in the closed state of the fixing device (10).

20. An adjustable steering column according to any one of claims 1 to 19, **characterised in that** a spring device acting between the immobilising part and the counter immobilising part is provided for parallel orientation of the teeth (40, 41) of the immobilising part (17) and counter immobilising part (18), which spring device displaces the counter immobilising part (18) with respect to the immobilising part (17) in a direction at right angles to the adjusting direction (39), as far as reciprocal impact.

## Revendications

1. Colonne de direction réglable de véhicule automobile comportant une installation de blocage (10) qui, en position ouverte, permet de régler la colonne de direction dans au moins une direction de réglage et qui, en position fermée, bloque la position réglée de la colonne de direction et comporte au moins une pièce de blocage (17) pour la direction de réglage ou au moins l'une des directions de réglage (39), pour bloquer la position réglée, cette pièce de blocage ayant au moins une denture (22, 23) avec des dents (40) et au moins une pièce de blocage (18), complémentaire, ayant au moins une denture complémentaire (27, 28) avec des dents (41),
en position fermée de l'installation de blocage, les dents (40) de la pièce de blocage (17) sont en prise avec les dents (41) de la pièce de blocage complémentaire (18) et lors de l'ouverture de l'installation de blocage (10), la pièce de blocage complémentaire (18) se soulève de la pièce de blocage (17) dans le sens de l'ouverture (49) et en position ouverte de l'installation de blocage (10), les dents (41) de la pièce de blocage complémentaire (18) sont hors de prise des dents (40) de la pièce de blocage (17) et
dans une section dont le plan est parallèle à la direction de réglage (39) et parallèle à la direction d'ouverture (49), passant par les dents (40, 41) de la pièce de blocage (17) et de la pièce de blocage complémentaire (18), les deux flancs latéraux (45, 46 ; 47, 48) des dents (40, 41) de la pièce de blocage (17) et de la pièce de blocage complémentaire (18) l'installation de blocage (10) étant en position fermée, forment dans au moins un segment de leur extension, des angles d'inclinaison (52) inférieurs à 20° et de préférence inférieurs à 12° avec la direction d'ouverture (49),
**caractérisée en ce qu'**
au moins certaines des dents de la pièce de blocage (17) ou de la pièce de blocage complémentaire (18) ont en section des dents (40, 41), des extrémités libres avec de préférence des formes de coin écrasé, qui en prise avec les dents (40, 41) de la pièce de blocage complémentaire (18) ou de la pièce de blocage (17), en position fermée de l'installation de blocage (10), pénètrent au moins par segment dans les cavités (53) en forme de V dont les fonds (51, 50) des intervalles entre ces dents (41, 40) ou du moins certaines des dents (40, 41) de la pièce de blocage (17) ou de la pièce de blocage complémentaire (18), en section des dents (40, 41), présentent au niveau de leur extrémité libre, une partie inclinée (43) respective, qui lors de la prise avec les dents (41, 40) de la pièce de blocage complémentaire (18) ou de la pièce de blocage (17), en position fermée de l'installation de blocage (10), s'appuient contre des fonds (51, 50) réalisés de façon inclinée des intervalles de ces dents (41, 40).

2. Colonne de direction réglable selon la revendication 1,
**caractérisée en ce que**
ce segment de l'extension des flancs de dents respectifs (45, 46 ; 47, 48) dans lequel le flanc forme un angle d'inclinaison (52) de moins de 20° et de préférence de moins de 12° avec la direction d'ouverture (49), s'étend sur une grande partie de la hauteur (h1, h2) des dents (40, 41).

3. Colonne de direction réglable selon la revendication 1 ou selon la revendication 2,
**caractérisée en ce que**
l'angle d'inclinaison (52) des flancs (45, 46 ; 47, 48) des dents (40, 41) par rapport à la direction d'ouverture (49) se situe à moins de 5° par rapport à l'angle d'inclinaison maximum jusqu'à celui de la force agissant de façon autobloquante dans la direction de réglage (39) pour l'engrènement des dents entre la partie fixe (17) et la partie fixe complémentaire (18) en position de fermeture de l'installation de blocage, pour laquelle la partie fixe (17) et la partie fixe complémentaire (18) bloquent le réglage de la colonne de direction.

4. Colonne de direction réglable selon l'une des revendications 1 à 3,
**caractérisée en ce que**
l'engrènement entre la partie fixe (17) et la partie fixe complémentaire (18) pour une force agissant dans la direction de réglage (39) dans laquelle la pièce fixe (17) et la pièce fixe complémentaire (18) bloquent le réglage de la colonne de direction, est un engrènement autobloquant.

5. Colonne de direction réglable selon l'une des revendications 1 à 4,
**caractérisée en ce que**
la partie fixe (17) comporte au moins une première denture (22) et au moins une seconde denture (23) coopérant avec une première denture complémentaire (27) ou une seconde denture complémentaire (28) de la pièce de blocage complémentaire (18).

6. Colonne de direction réglable selon la revendication 5,
**caractérisée en ce que**
dans une vue en coupe de la pièce de fixation (17) et de la pièce de fixation complémentaire (18), le plan de coupe étant perpendiculaire à la direction de réglage (39) et parallèle à la direction d'ouverture (49), la première denture (22) et la seconde denture (23) ainsi que la première denture complémentaire (27) et la seconde denture complémentaire (28) sont disposées les unes par rapport aux autres suivant une forme de V sur au moins un segment de l'extension longitudinale des dents (40, 41, l'angle entre la première denture (22) et la seconde denture (23) étant égal à l'angle compris entre la première denture complémentaire (27) et la seconde denture complémentaire (28).

7. Colonne de direction réglable selon la revendication 5 ou la revendication 6,
**caractérisée par**
un décalage (v) entre les dents (40) de la première denture (22) et les dents (41) de la seconde denture (23) ou entre les dents (41) de la première denture complémentaire (27) et les dents (41) de la seconde denture complémentaire (28), dans la direction de réglage (39), ce décalage (v) correspondant à une partie de la distance (a) comprise entre le milieu de dents successives (40, 41).

8. Colonne de direction réglable selon la revendication 7,
**caractérisée en ce que**
le décalage (v) représente la moitié de la distance (a) entre les milieux de dents successifs (40, 41).

9. Colonne de direction réglable selon la revendication 8,
**caractérisée en ce que**
la partie de fixation complémentaire (18) ou la partie de fixation (17) peuvent basculer autour d'un axe de pivotement (44) parallèle à la direction de réglage (39) dans laquelle agit la pièce de fixation complémentaire (18) ou la pièce de fixation (17), et lors de la fermeture de l'installation de blocage (10), la pièce de fixation complémentaire (18) ou la pièce de fixation (17) bascule pour son engrènement soit entre les dents (40) de la première denture (22) et les dents (41) de la première denture complémentaire (27) soit entre les dents (40) de la seconde denture (23) et les dents (41) de la seconde denture complémentaire (28) par basculement autour de l'axe de pivotement (44).

10. Colonne de direction réglable selon la revendication 8 ou la revendication 9,
**caractérisée en ce que**
la pièce de fixation complémentaire (18) comporte des premières et secondes pièces de poussoir (54, 55),
la première denture complémentaire (27) est sur la première pièce de poussoir (54) et la seconde denture complémentaire (28) est sur la seconde pièce de poussoir (55) et à la fermeture de l'installation de blocage (10), les pièces de poussoir (54, 54) coulissent à l'opposé de la direction d'ouverture (49) et de manière indépendante l'une de l'autre.

11. Colonne de direction réglable selon la revendication 10,
**caractérisée en ce que**
les pièces de poussoir (54, 55) sont montées coulissantes dans une pièce de guidage (56) par rapport à laquelle une pièce d'actionnement (57) est montée pivotante, et à la fermeture de l'installation de blocage (10), cette pièce d'actionnement coopère avec les pièces de poussoir (54, 55) pour coulisser celles-ci dans la direction opposée à la direction d'ouverture (49).

12. Colonne de direction réglable selon l'une des revendications 1 à 11,
**caractérisée en ce que**
la pièce de fixation complémentaire (18) ou la pièce de fixation (17) peuvent pivoter autour d'un axe transversal (68) perpendiculaire à la direction de réglage (39) suivant laquelle agit la pièce de fixation complémentaire (18) et perpendiculaire à la direction d'ouverture (49) et la pièce de fixation complémentaire (18) ou la pièce de fixation (17) à l'état ouvert de l'installation de blocage (10) est basculée autour de cet axe par rapport à la pièce de fixation (17) ou à la pièce de fixation complémentaire (18) en position inclinée.

13. Colonne de direction réglable selon la revendication 12,
**caractérisée par**
des ressorts (29a, 29b) installés entre la pièce de fixation (17) et la pièce de fixation complémentaire (18), ces ressorts écartant les deux pièces (17, 18) l'une de l'autre lorsque l'installation de blocage est à l'état ouvert, ces ressorts basculant la pièce de fixation complémentaire (18) par rapport à la pièce de fixation (17) autour de l'axe transversal (68) dans la position inclinée que l'on a lorsque l'installation de blocage (10) est à l'état ouvert, les ressorts (29a, 29b) étant des ressorts hélicoïdaux ayant de préférence une longueur différente.

14. Colonne de direction réglable selon la revendication 12 ou la revendication 13,
**caractérisée en ce que**
de part et d'autre, la première et la seconde denture (22, 23) ainsi que la première et la seconde denture complémentaire (27, 28) comportent des segments d'accrochage (73) disposés l'un par rapport à l'autre suivant une forme de V en coupe à travers les dentures (22, 23, 27, 28), des segments d'amorçage latéraux, parallèles et situés dans le même plan.

15. Colonne de direction réglable selon l'une des revendications 1 à 14,
**caractérisée en ce que**
l'installation de blocage (10) comporte un goujon de blocage (13) traversant au moins une pièce de fixation (17) et au moins une pièce de fixation complémentaire (18) par des orifices (21, 24).

16. Colonne de direction réglable selon la revendication 15,
**caractérisée en ce que**
le goujon de blocage (13) comporte une pièce d'appui (34) pour s'appuyer contre une surface d'appui (33) de la pièce de fixation complémentaire (18), du côté non tourné vers la pièce de fixation (17),
et à l'état fermé du dispositif de blocage (10), la pièce de fixation complémentaire (18) est pressée par la pièce d'appui (34) contre la pièce de fixation (17).

17. Colonne de direction réglable selon la revendication 16,
**caractérisée en ce que**
la pièce d'appui (34) est réalisée sous la forme d'un palier axial.

18. Colonne de direction réglable selon la revendication 16 ou la revendication 17,
**caractérisée en ce que**
la surface d'appui (34) de la pièce de fixation complémentaire (18) est courbée de façon convexe vers la pièce d'appui (34) et comporte des surfaces inclinées reliées par un sommet ou une zone courbe contre laquelle s'appuie la pièce d'appui (34).

19. Colonne de direction réglable selon l'une des revendications 1 à 18,
**caractérisée en ce que**
l'angle d'inclinaison (52) compris entre les flancs (45, 46, 47, 48) des dents (40, 41) de la pièce de fixation (17) et de la pièce de fixation complémentaire (18) et la direction d'ouverture (49) à l'état fermé de l'installation de blocage (10) est supérieur à 3°.

20. Colonne de direction réglable selon l'une des revendications 1 à 19,
**caractérisée par**
une installation à ressort agissant entre la pièce de fixation et la pièce de fixation complémentaire pour positionner en parallèle les dents (40, 41) de la pièce de fixation (17) et de la pièce de fixation complémentaire (18), cette installation de ressort coulissant la pièce de fixation complémentaire (18) par rapport à la pièce de fixation (17) dans une direction perpendiculaire à la direction de réglage (39) jusqu'à leur appui réciproque.
